# EUROPÄISCHE PATENTSCHRIFT

(11) **EP 4 717 567 B1**
(45) Veröffentlichungstag und Bekanntmachung des Hinweises auf die Patenterteilung: **18.11.2026**
(21) Anmeldenummer: 25205212.1
(22) Anmeldetag: 29.09.2025
(51) Int. Cl.: B62H 5/14

(54) **ELEKTRONISCHES RAHMENSCHLOSS**
ELECTRONIC FRAME LOCK
SERRURE DE CADRE ÉLECTRONIQUE

(30) Priorität: 30.09.2024 DE 102024128239
(43) Veröffentlichungstag der Anmeldung: 01.04.2026
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A2- 1 818 246
- DE-U1- 20 316 619

## Beschreibung

Die Erfindung betrifft ein elektronisches Rahmenschloss für ein Fahrrad, insbesondere für ein E-Bike. Das Rahmenschloss umfasst einen zwischen einer Offenstellung und einer Geschlossenstellung drehbaren Rundbügel, einen Schlosskörper und einen elektromechanischen Verriegelungsmechanismus mit einem zwischen einer Verriegelungsstellung und einer Entriegelungsstellung beweglichen Riegel. Der Riegel ist dazu ausgebildet, in einer Verriegelungsstellung den in der Geschlossenstellung positionierten Rundbügel gegen eine Bewegung in die Offenstellung zu sichern. Der Elektromotor ist dazu ausgebildet, den Riegel zum Freigeben einer Bewegung des Rundbügels in die Offenstellung zu einer Bewegung aus der Verriegelungsstellung in die Entriegelungsstellung anzutreiben. Darüber hinaus umfasst das elektronische Rahmenschloss ein Kabel zum Empfangen eines Steuersignals und/oder einer Energieversorgung für den Elektromotor.

Beispielsweise kann ein Rahmenschloss derart an einem Rahmen eines Fahrrads befestigt werden, dass der Rundbügel in der Geschlossenstellung zwischen zwei Speichen eines der Laufräder des Fahrrads hindurchgreifen kann, um das Fahrrad dadurch gegen ein unbefugtes Wegfahren zu sichern. In der Offenstellung kann der Rundbügel hingegen aus einem Raum zurückgezogen sein, in welchem das Laufrad während einer Fahrt mit dem Fahrrad dreht, so dass das Fahrrad bewegt werden kann. Ein Fahrrad, welches durch ein derartiges Rahmenschloss sicherbar ist, kann beispielsweise als ein Zweirad ausgebildet sein, wobei Rahmenschlösser jedoch auch zur Sicherung von dreirädrigen oder vierrädrigen Fahrrädern, beispielsweise Lastenrädern, genutzt werden können. Zudem kann das Fahrrad grundsätzlich muskelkraftbetrieben, motorbetrieben oder motorunterstützt sein, insbesondere ebenfalls durch einen Elektromotor (z.B. E-Bike oder Pedelec, Elektrodreirad, Elektrorollstuhl, Elektroquad oder dergleichen).

Durch Ausbilden derartiger Rahmenschlösser mit elektromechanischen Verriegelungsmechanismen kann eine einfache und komfortable Möglichkeit zur Bedienung des Rahmenschlosses bereitgestellt werden, da etwa kein Schlüssel zur Betätigung des Rahmenschlosses mitgeführt werden muss, sondern der Riegel durch Übermitteln eines entsprechenden Steuersignals an den Elektromotor in die Entriegelungsstellung überführt werden kann, um das Rahmenschloss öffnen und den Rundbügel in die Offenstellung überführen zu können.

Rahmenschlösser mit elektromechanischen Verriegelungsmechanismen sind beispielsweise aus den Dokumenten DE 203 16 619 U1 und EP 1 818 246 A2 bekannt.

Jedoch können derartige Rahmenschlösser eine vollständig autarke Ausbildung mit eigener Energiequelle und Empfangseinrichtung zum Empfangen der Steuerbefehle erfordern, wobei sich dies häufig unerwünscht komplex gestaltet und zudem die Problematik mit sich bringt, stets eine ausreichende Energieversorgung des Rahmenschlosses durch die integrierte Energiequelle überwachen und sicherstellen zu müssen. Alternativ dazu kann daher vorgesehen sein, Steuersignale für den Elektromotor und/oder eine Energieversorgung über ein Kabel an das Rahmenschloss zu übermitteln, welches beispielsweise an eine Batterie eines als E-Bike ausgebildeten Fahrrads angeschlossen sein kann.

Da ein solches Kabel jedoch aus dem Schlosskörper des Rahmenschlosses herausgeführt werden muss, ist das Kabel von außen zumeist unmittelbar zu erkennen. Derartige freiliegende und aus einem Schloss austretende Kabel können dabei als scheinbare Schwachstellen und potentielle Möglichkeiten zum Öffnen des Schlosses erkannt werden, was dazu führen kann, dass solche Kabel bei Aufbruchsversuchen mit dem Ziel durchtrennt werden, das Rahmenschloss dadurch zu öffnen. Selbst wenn ein solches Durchtrennen des Kabels aufgrund des in der Verriegelungsstellung verharrenden Riegels zumeist nicht dazu führt, dass das Rahmenschloss tatsächlich geöffnet werden kann, können solche freiliegenden Kabel somit gewissermaßen einen Vandalismusschaden provozieren, infolgedessen auch ein berechtigter Nutzer das Rahmenschloss aufgrund des nicht mehr ansteuerbaren Elektromotors nicht ohne Weiteres öffnen kann, um das Fahrrad für eine Fahrt freizugeben.

Daher ist es eine Aufgabe der Erfindung, ein Rahmenschloss mit einem elektromechanischen Verriegelungsmechanismus zu schaffen, bei welchem ein Kabel zum Empfangen eines Steuersignals und/oder einer Energieversorgung von einer externen Quelle nicht unmittelbar erkennbar ist.

Diese Aufgabe wird gelöst durch ein Rahmenschloss mit den Merkmalen des Anspruchs 1.

Das Rahmenschloss weist eine bezogen auf eine Umfangsrichtung des Rundbügels radial innenliegende Innenseite und eine bezogen auf die Umfangsrichtung des Rundbügels radial außenliegende Außenseite auf, wobei der Schlosskörper eine an der Innenseite gelegene Kabelaustrittsöffnung aufweist, durch welche das Kabel aus dem Schlosskörper austritt.

Durch eine Ausbildung der Kabelaustrittsöffnung an der radial bezüglich der Umfangsrichtung des Rundbügels innenliegenden Innenseite des Rahmenschlosses kann die Kabelaustrittsöffnung insbesondere derart angeordnet sein, dass die Kabelaustrittsöffnung in einem an einem Fahrrad montierten Zustand des Rahmenschlosses dem Laufrad zugewandt ist, welches durch den Rundbügel des Rahmenschlosses blockierbar ist. Die Anordnung der Kabelaustrittsöffnung an der Innenseite ermöglicht somit, das Kabel aus dem Rahmenschloss heraus in Richtung des zu blockierenden Laufrades zu führen und gewissermaßen unterhalb des Rahmenschlosses (also dem Laufrad zugewandt und somit zwischen dem Rahmenschloss und dem Laufrad) zu verstecken, so dass der Kabelaustritt und das ausgetretene Kabel nicht unmittelbar ersichtlich sind.

Insbesondere unterscheidet sich diese Kabelführung somit von herkömmlichen Lösungen, bei welchen der Elektromotor in einem Schlossgehäuse und radial nach außen versetzt zu dem Rundbügel angeordnet ist, wobei das Kabel aus einer Stirnseite dieses Schlossgehäuses und damit im montierten Zustand oberhalb des Rundbügels und/oder tangential zu dem Rundbügel aus dem Schlosskörper austritt. Bei solchen Lösungen ist das Kabel unmittelbar von außen erkennbar, da die Kabelaustrittsöffnung nicht verdeckt und das Kabel nicht verdeckt geführt ist. Insbesondere eine solche Kabelführung kann daher die eingangs erwähnten Vandalismusschäden aufgrund eines Versuchs, das Schloss durch Durchtrennen des Kabels zu öffnen, zur Folge haben. Der Kabelaustritt an einer Innenseite des Rahmenschlosses gemäß der vorliegenden Offenbarung ermöglicht hingegen, den Schlosskörper des Rahmenschlosses gewissermaßen als Sichtschutz zu verwenden, so dass kein aus dem Schlosskörper austretendes Kabel von außen ersichtlich ist.

Insbesondere kann ein Austritt des Kabels an der Innenseite des Rahmenschlosses zudem ermöglichen, das Kabel an der Innenseite des Rahmenschlosses entlang zu einem Fahrradrahmen des Fahrrads zu führen, an welchem das Rahmenschloss befestigt ist. An dem Fahrradrahmen kann beispielweise eine Eintrittsöffnung ausgebildet sein, durch welche das Kabel in den Fahrradrahmen einführbar ist. Bei einer solchen Gestaltung oder Kabelführung kann das Kabel somit durch das Rahmenschloss oder dessen Schlosskörper verdeckt bis zu dem Fahrradrahmen und in den Fahrradrahmen eingeführt sein, so dass das Kabel von außen nicht unmittelbar erkannt werden kann.

Indem die Innenseite radial bezogen auf eine Umfangsrichtung des Rundbügels innen liegen kann, kann die Innenseite insbesondere auch bezogen auf eine Drehachse, um welche der Rundbügel zwischen der Geschlossenstellung und der Offenstellung drehbar ist, radial innenliegend ausgerichtet sein, wohingegen die Außenseite des Rahmenschlosses bezogen auf die Drehachse des Rundbügels radial außenliegend angeordnet sein kann. Alternativ oder zusätzlich kann die Innenseite des Rahmenschlosses einem durch den Rundbügel zu blockierenden Laufrad eines Fahrrads in einem an dem Fahrrad montierten Zustand des Rahmenschlosses zugewandt sein, wohingegen die Außenseite des Rahmenschlosses dem Laufrad im montierten Zustand abgewandt sein kann.

Allgemein kann der Rundbügel dazu ausgebildet sein, in der Offenstellung einen Zwischenraum zwischen zwei benachbarten Endabschnitten des Schlosskörpers freizugeben und den Zwischenraum in der Geschlossenstellung zu durchgreifen. Insofern kann das Rahmenschloss bei in der Geschlossenstellung positioniertem Rundbügel insbesondere einen geschlossenen Ring ausbilden, um hierdurch eine Drehung eines durchgriffenen Laufrads blockieren zu können. Zudem kann der Schlosskörper insbesondere sich in Richtung der Endabschnitte erstreckende Führungsabschnitte zur Führung des Rundbügels und/oder einen sich von dem Rundbügel weg erstreckenden zentralen Schlosskörperabschnitt aufweisen, in welchem der Elektromotor und/oder der Riegel angeordnet sind/ist. Beispielsweise kann ein solcher Schlosskörperabschnitt, in welchem der Elektromotor und/oder der Riegel angeordnet sind/ist, entgegengesetzt zu dem von dem Rundbügel in der Offenstellung freigegebenen Zwischenraum angeordnet sein. Ferner kann ein solcher Schlosskörperabschnitt bei an dem Fahrrad montiertem Rahmenschloss insbesondere oberhalb eines Laufrads angeordnet sein, dessen Drehung bei in der Geschlossenstellung positioniertem Rundbügel durch das Rahmenschloss blockiert ist.

Weitere Ausführungsformen sind in den abhängigen Ansprüchen, der Beschreibung sowie anhand der Zeichnungen erläutert.

Der Schlosskörper kann bei einigen Ausführungsformen ein Schlossgehäuse aufweisen, innerhalb dessen der Elektromotor angeordnet ist. Das Schlossgehäuse kann ferner eine Gehäuseöffnung aufweisen, durch welche das Kabel in einer bezogen auf die Umfangsrichtung im Wesentlichen tangentialen Richtung aus dem Schlossgehäuse austritt.

Insbesondere kann das Schlossgehäuse den vorstehend erwähnten Schlosskörperabschnitt umfassen, welcher einem von dem Rundbügel in der Geschlossenstellung durchgriffenen Zwischenraum entgegengesetzt angeordnet ist. Ein solches Schlossgehäuse kann zudem insbesondere ein Innengehäuse bilden und dazu dienen, den Elektromotor und/oder den Riegel vor etwaigen unbefugten Zugriffsversuchen zu schützen. Beispielsweise kann das Schlossgehäuse daher aus Stahl und/oder Metall ausgebildet sein.

Indem das Schlossgehäuse eine Gehäuseöffnung aufweisen kann, durch welche das Kabel tangential bezüglich des Rundbügels aus dem Schlossgehäuse austritt, kann das Kabel insbesondere an einer Stirnseite des Schlossgehäuses oder eines den Elektromotor einhausenden Teils des Schlossgehäuses austreten. Ferner kann auch der Elektromotor im Wesentlichen tangential zu dem Rundbügel ausgerichtet sein, so dass es eine solche Kabelführung insbesondere ermöglichen kann, das Kabel zunächst geradlinig von Anschlüssen des Elektromotors aus dem Schlossgehäuse herauszuführen, ohne das Kabel bereits in dem Schlossgehäuse umbiegen zu müssen. Vielmehr kann das Kabel nach dem Austritt aus dem Schlossgehäuse umgelenkt sein, um von dem tangentialen Austritt durch die Gehäuseöffnung zu der Kabelaustrittsöffnung an der Innenseite des Rahmenschlosses geführt zu werden. Hierdurch kann das Kabel mit einem angemessen großen Biegeradius außerhalb des Schlossgehäuses umgelenkt sein, ohne dass eigens ein zusätzlicher Bauraum innerhalb des Schlossgehäuses oder eines den Elektromotor einhausenden Teils des Schlossgehäuses zum Umlenken des Kabels geschaffen werden muss.

Das Schlossgehäuse kann bei den Ausführungsformen einen im Wesentlichen tangential zu dem Rundbügel ausgerichteten zentralen Gehäuseabschnitt aufweisen, wobei die Gehäuseöffnung an einer Stirnseite des zentralen Gehäuseabschnitts angeordnet sein kann.

Insbesondere kann der zentrale Gehäuseabschnitt den Elektromotor einhausen, wobei das Kabel aufgrund der tangentialen Erstreckung des zentralen Gehäuseabschnitts letztlich geradlinig an der Stirnseite aus dem zentralen Gehäuseabschnitt herausführbar sein kann. Das Schlossgehäuse kann zudem beispielsweise sich an den zentralen Gehäuseabschnitt anschließende Führungsabschnitte zum Führen des Rundbügels aufweisen. Grundsätzlich kann der zentrale Gehäuseabschnitt, wie bereits erwähnt, entgegengesetzt zu einem von dem Rundbügel in der Offenstellung freigelassenen Zwischenraum angeordnet sein. Jedoch kann auch eine im Vergleich zu einer solchen Anordnung um eine Drehachse des Rundbügels verdrehte Anordnung des zentralen Gehäuseabschnitts vorgesehen sein, so dass der zentrale Gehäuseabschnitt nicht zwangsläufig entgegengesetzt zu dem Zwischenraum angeordnet sein muss.

Der Elektromotor kann bei einigen Ausführungsformen in dem zentralen Gehäuseabschnitt angeordnet sein und der Elektromotor kann insbesondere tangential zu dem Rundbügel ausgerichtet sein. Insbesondere kann durch eine solche Ausrichtung des Elektromotors eine kompakte Ausbildung des Rahmenschlosses in radialer Richtung bezogen auf eine Drehachse des Rundbügels erreicht werden, indem die Erstreckung des zentralen Gehäuseabschnitts gleichsam auf die tangentiale Richtung konzentriert werden kann.

Bei einigen Ausführungsformen kann das Schlossgehäuse sich von dem zentralen Gehäuseabschnitt weg und in Umfangsrichtung des Rundbügels erstreckende Führungsabschnitte zur Führung des Rundbügels aufweisen.

Insbesondere können solche Führungsabschnitte die bereits erwähnten Endabschnitte des Schlossgehäuses bilden, zwischen welchen der in der Offenstellung des Rundbügels freibleibende Zwischenraum liegen kann. Insofern kann bei einigen Ausführungsformen vorgesehen sein, dass der in der Offenstellung positionierte Rundbügel vollständig von den Führungsabschnitten umschlossen ist, wobei jedoch bei anderen Ausführungsformen vorgesehen sein kann, dass der Rundbügel auch in der Offenstellung einseitig oder zweiseitig aus dem Schlossgehäuse und insbesondere den Führungsabschnitten herausragt.

Das Schlossgehäuse kann bei einigen Ausführungsformen eine sich an die Gehäuseöffnung anschließende Gehäusebiegung aufweisen, entlang welcher das aus der Gehäuseöffnung austretende Kabel zu der Kabelaustrittsöffnung geführt ist.

Indem das Kabel tangential aus der Gehäuseöffnung austreten kann, kann eine Umlenkung des Kabels erforderlich sein, um letztlich den Austritt aus der Kabelaustrittsöffnung an der Innenseite des Rahmenschlosses zu ermöglichen. Dahingehend kann die Gehäusebiegung insbesondere ermöglichen, ein ausreichend sanftes Biegen des Kabels zu erreichen, so dass die erforderliche Umlenkung nicht mit einem Knick des Kabels aufgrund eines zu geringen Biegeradiuses einhergeht. Zudem kann eine solche Gehäusebiegung ohnehin erforderlich sein, um einen Übergang von einem tangential ausgerichteten zentralen Gehäuseabschnitt zu einem Führungsabschnitt des Schlossgehäuses zu realisieren, in welchem der Rundbügel geführt ist. Insofern kann die Gehäusebiegung bei einigen Ausführungsformen insbesondere einen Übergang zwischen einem zentralen Gehäuseabschnitt des Schlossgehäuses, in welchem der Elektromotor angeordnet ist, zu einem Führungsabschnitt des Schlossgehäuses bilden, in welchem der Rundbügel geführt ist. Zudem kann die Gehäusebiegung insbesondere gekrümmt ausgebildet sein.

Bei einigen Ausführungsformen kann die Gehäusebiegung einen Biegeradius für eine Führung des Kabels zu der Kabelaustrittsöffnung bestimmen.

Insbesondere kann das Kabel dazu entlang der Gehäusebiegung geführt sein, um nach dem tangentialen Austritt aus der Gehäuseöffnung zu der an der Innenseite des Rahmenschlosses ausgebildeten Kabelaustrittsöffnung geführt werden zu können, ohne dass ein Knicken des Kabels erforderlich ist.

Das Schlossgehäuse kann bei einigen Ausführungsformen zumindest abschnittsweise in einem Außengehäuse aufgenommen sein, wobei das Außengehäuse die Kabelaustrittsöffnung aufweisen kann.

Insbesondere kann das Schlossgehäuse somit ein Innengehäuse bilden und zur sicheren Aufnahme des Verriegelungsmechanismus, des Elektromotors und/oder des Riegels gegenüber unbefugten Zugriffen und/oder Aufbruchsversuchen dienen. Zudem kann das Schlossgehäuse jedoch von einem Außengehäuse umgeben sein, welches insbesondere als Verkleidung dienen und somit das äußere Erscheinungsbild des Rahmenschlosses bestimmen kann, ohne jedoch einen sicheren Aufbruchsschutz bieten zu müssen.

Indem das Außengehäuse die Kabelaustrittsöffnung aufweisen kann, kann das aus dem Schlossgehäuse austretende Kabel zunächst innerhalb des Außengehäuses und somit zwischen der Gehäuseöffnung und der Kabelaustrittsöffnung von außen nicht sichtbar geführt sein, bevor das Kabel aus der Kabelaustrittsöffnung an der Innenseite des Rahmenschlosses herausgeführt sein kann. Daher kann das Kabel bei solchen Ausführungsformen insbesondere von dem Elektromotor bis zu der Kabelaustrittsöffnung vollständig in einem Innenraum des Schlosskörpers geführt sein, wobei das Kabel zwischen dem Elektromotor und der Gehäuseöffnung von dem Schlossgehäuse und in der Folge lediglich von dem Außengehäuse umschlossen sein kann.

Das Außengehäuse kann bei einigen Ausführungsformen ein Kunststoffgehäuse sein.

Bei einigen Ausführungsformen kann das Rahmenschloss einen Befestigungsabschnitt mit zumindest einer Befestigungsöffnung zum Befestigen, insbesondere Verschrauben, des Rahmenschlosses an einem Rahmen des Fahrrads mittels eines Befestigungselements, insbesondere einer Schraube, aufweisen.

Beispielsweise kann ein solcher Befestigungsabschnitt von einem Blech gebildet sein, welches sich radial nach innen in einen von dem Rundbügel umschlossenen Innenraum erstreckt und zumindest eine Befestigungsöffnung aufweist, durch welche hindurch ein Befestigungselement, insbesondere eine Schraube, in eine zugeordnete Bohrung, insbesondere eine Gewindebohrung, an einem Fahrradrahmen einführbar sein kann, um das Rahmenschloss an dem Fahrradrahmen zu befestigen. Insbesondere kann vorgesehen sein, dass das Rahmenschloss zwei einander entgegengesetzte Befestigungsabschnitte mit zumindest einer jeweiligen Befestigungsöffnung aufweist, so dass das Rahmenschloss zweiseitig an dem Fahrradrahmen und insbesondere jeweiligen Hinterbaustreben befestigbar sein kann. Der Befestigungsabschnitt oder die Befestigungsabschnitte kann/können insbesondere im Wesentlichen tangential zu dem Rundbügel, jedoch senkrecht zu einem zentralen Gehäuseabschnitt eines Schlossgehäuses ausgerichtet sein, in welchem der Elektromotor angeordnet ist. Insbesondere kann der Befestigungsabschnitt daher bei an dem Fahrrad befestigtem Rahmenschloss parallel zu einem Laufrad ausgerichtet sein, welches durch das Rahmenschloss blockierbar ist.

Der Befestigungsabschnitt kann bei einigen Ausführungsformen durch eine Schutzkappe überdeckt sein, wobei das Kabel aus der Kabelaustrittsöffnung in einen von dem Befestigungsabschnitt und der Schutzkappe begrenzten Innenraum eingeführt sein kann.

Eine solche Führung des Kabels kann es insbesondere ermöglichen, dass das Kabel auch nach dem Austritt aus der Kabelaustrittsöffnung noch vor einem Erkennen geschützt ist, indem das Kabel von der Innenseite des Rahmenschlosses, dem Begrenzungsabschnitt und der Schutzkappe eingeschlossen sein kann.

Bei der Schutzkappe kann es sich grundsätzlich um ein an dem Befestigungsabschnitt anbringbares und beispielsweise auf den Befestigungsabschnitt aufsteckbares Zusatzteil handeln, um die optische Gestaltung des Rahmenschlosses zu bestimmen und insbesondere in einem an dem Fahrrad montierten Zustand des Rahmenschlosses den Befestigungsabschnitt und das Befestigungselement zu verdecken.

Bei einigen Ausführungsformen kann der Befestigungsabschnitt zumindest zwei BefestigungsÖffnungen aufweisen, wobei das Befestigungselement zum Befestigen des Rahmenschlosses an dem Fahrrad durch eine erste der zumindest zwei Befestigungsöffnungen führbar ist und wobei eine zweite der zumindest zwei Befestigungsöffnungen dazu vorgesehen ist, bei einer Befestigung des Rahmenschlosses an dem Fahrrad frei zu bleiben. Ferner kann bei solchen Ausführungsformen vorgesehen sein, dass das Kabel durch die zweite Befestigungsöffnung hindurchführbar ist. Alternativ dazu kann bei solchen Ausführungsformen ein mit dem Kabel verbindbares Anschlusskabel zum Herstellen einer Verbindung mit dem Kabel durch die zweite Befestigungsöffnung hindurchführbar sein. Zudem kann der Befestigungsabschnitt bei solchen Ausführungsformen insbesondere genau zwei, genau drei oder genau vier Befestigungsöffnungen aufweisen.

Indem das Kabel durch die freibleibende zweite Befestigungsöffnung herausführbar oder ein Anschlusskabel durch die zweite Befestigungsöffnung einführbar sein kann, kann das Kabel des Rahmenschlosses (gegebenenfalls durch das Anschlusskabel verlängert) durch die zweite Befestigungsöffnung hindurch zu einer externen Quelle geführt sein, um eine Signalverbindung oder eine Energieversorgung in den Schlosskörper und zu dem Elektromotor herstellen zu können. Hierbei kann durch die freibleibende Befestigungsöffnung insbesondere eine Führung des Kabels aus dem vorstehend erwähnten, durch die Schutzkappe und den Befestigungsabschnitt begrenzten Innenraum erfolgen, ohne dass gesonderte Öffnungen an der Schutzkappe, dem Befestigungsabschnitt oder dem Schlosskörper vorgesehen werden müssen.

Grundsätzlich kann vorgesehen sein, dass das Kabel des Rahmenschlosses mit einem Anschlusskabel zu verbinden ist, um beispielsweise eine von einer Batterie eines E-Bikes bereitgestellte Energieversorgung über das Anschlusskabel und das Kabel zu dem Elektromotor führen zu können. Hierzu kann das Kabel mit dem Anschlusskabel insbesondere über eine Stecker-Buchse-Verbindung verbindbar sein, wobei der Stecker und/oder die Buchse der Stecker-Buchse-Verbindung durch die freibleibende zweite Befestigungsöffnung hindurchführbar sein kann, um die Verbindung zwischen dem Anschlusskabel und dem Kabel entweder in dem Innenraum der Schutzkappe oder nach einem Herausführen des Kabels aus dem Innenraum herstellen zu können. Insbesondere bei einem Herstellen der Verbindung in dem Innenraum der Schutzkappe kann jedoch erreicht werden, dass auch die Stecker-Buchse-Verbindung von außen nicht sichtbar und daher vor etwaigen Aufbruchsversuchen geschützt ist.

Grundsätzlich kann der Befestigungsabschnitt ferner zumindest zwei Befestigungsöffnungen aufweisen, um eine Möglichkeit zur flexiblen Befestigung an einem Fahrradrahmen zu schaffen, indem wahlweise eine jeweilige der Befestigungsöffnungen zum Befestigen des Rahmenschlosses genutzt werden kann. Insofern kann diejenige der Befestigungsöffnungen, welche freibleibt und durch welche das Kabel oder das Anschlusskabel führbar ist, insbesondere von der tatsächlichen Befestigung des Rahmenschlosses an dem Zweirad abhängen. Jedoch kann bei einigen Ausführungsformen auch vorgesehen sein, dass eine spezielle zweite Befestigungsöffnung an dem Befestigungsabschnitt ausgebildet ist, welche ausschließlich zur Führung des Kabels vorgesehen ist.

Bei einigen Ausführungsformen kann das Kabel ferner durch eine Stecker-Buchse-Verbindung mit dem Anschlusskabel verbindbar sein, wobei ein Stecker der Stecker-Buchse-Verbindung und/oder eine Buchse der Stecker-Buchse-Verbindung durch die zweite Befestigungsöffnung hindurchführbar sein kann.

Beispielsweise kann an dem Kabel ein Stecker und an dem Anschlusskabel eine Buchse ausgebildet sein, oder umgekehrt, um das Kabel und das Anschlusskabel durch eine Stecker-Buchse-Verbindung miteinander verbinden zu können.

Bei einigen Ausführungsformen kann der Befestigungsabschnitt zudem durch die bereits erwähnte Schutzkappe überdeckt sein, wobei das Kabel aus der Kabelaustrittsöffnung in den von dem Befestigungsabschnitt und der Schutzkappe begrenzten Innenraum eingeführt sein kann und wobei das Anschlusskabel und das Kabel in dem Innenraum miteinander verbunden sein können, insbesondere durch die erwähnte Stecker-Buchse-Verbindung.

Der Rundbügel kann bei einigen Ausführungsformen in die Offenstellung vorgespannt sein. Bei solchen Ausführungsformen kann der Rundbügel daher insbesondere unmittelbar aufgrund der Vorspannung von der Geschlossenstellung in die Offenstellung schnappen, wenn der Riegel durch den Elektromotor in die Entriegelungsstellung bewegt ist.

Bei einigen Ausführungsformen kann der Riegel dazu ausgebildet sein, in der Verriegelungsstellung den in der Offenstellung befindlichen Rundbügel gegen eine Bewegung in die Geschlossenstellung zu sichern. Ein Sichern des Rundbügels in der Offenstellung durch den Riegel kann insbesondere ein ungewolltes Bewegen des Rundbügels in die Geschlossenstellung, etwa während einer Fahrt mit dem Fahrrad, verhindern.

Bei einigen Ausführungsformen kann an dem Rundbügel eine Geschlossenstellung-Eingriffsöffnung vorgesehen sein, in welche der in der Verriegelungsstellung positionierte Riegel eingreift, wenn der Rundbügel in der Geschlossenstellung positioniert ist.

Ferner kann an dem Rundbügel bei einigen Ausführungsformen eine Offenstellung-Eingriffsöffnung vorgesehen sein, in welche der in der Verriegelungsstellung positionierte Riegel eingreift, wenn der Rundbügel in der Offenstellung positioniert ist.

Zudem kann das Rahmenschloss bei einigen Ausführungsformen eine von außen zugängliche Handhabe zum Bewegen des Rundbügels in die Geschlossenstellung aufweisen, insbesondere entgegen der vorstehend erwähnten Vorspannung in die Offenstellung.

Alternativ dazu kann das Rahmenschloss bei einigen Ausführungsformen einen Elektromotor aufweisen, welcher dazu ausgebildet ist, den Rundbügel wahlweise (insbesondere in Ansprechen auf einen empfangenen Verschlussbewegungsbefehl) von der Offenstellung in die Geschlossenstellung anzutreiben. Bei einigen Ausführungsformen kann der Elektromotor auch dazu ausgebildet sein, den Rundbügel wahlweise (insbesondere in Ansprechen auf einen empfangenen Öffnungsbewegungsbefehl) von der Geschlossenstellung in die Offenstellung anzutreiben, wobei alternativ oder zusätzlich dazu die erwähnte Vorspannung des Rundbügels in die Offenstellung vorgesehen sein kann. Bei dem Elektromotor zum Antreiben des Rundbügels kann es sich insbesondere um einen zu dem für das Antreiben des Riegels vorgesehenen Elektromotor zusätzlichen Elektromotor handeln. Das Kabel kann daher auch zum Empfangen eines Steuersignals und/oder einer Energieversorgung für den Elektromotor zum Antreiben des Rundbügels vorgesehen sein.

Durch einen solchen Elektromotor kann insbesondere ein vollständig automatisches Rahmenschloss bereitstellbar sein, bei welchem sowohl die Bewegung des Rundbügels zwischen der Offenstellung und der Geschlossenstellung als auch die Bewegung des Riegels zwischen der Verriegelungsstellung und der Entriegelungsstellung elektromotorisch angetrieben (ggf. zumindest in einer Richtung durch eine Vorspannung realisiert oder unterstützt) sein kann, so dass zur Bedienung des Schlosses keine unmittelbaren manuellen Eingriffe an dem Rahmenschloss erforderlich sind.

Grundsätzlich kann ferner auch vorgesehen sein, dass das Rahmenschloss lediglich einen Elektromotor zum Antreiben des Rundbügels von der Offenstellung in die Geschlossenstellung aufweist, wohingegen der Riegel als Teil eines mechanischen Verriegelungsmechanismus ausgebildet und beispielsweise durch einen zugeordneten Schlüssel antreibbar sein kann. Bei solchen Ausführungsformen kann das Kabel daher (insbesondere ausschließlich) zum Empfangen eines Steuersignals und/oder einer Energieversorgung für den Elektromotor zum Antreiben des Rundbügels vorgesehen sein.

Bei einigen Ausführungsformen kann vorgesehen sein, dass der Riegel in die Verriegelungsstellung vorgespannt ist. Dies kann insbesondere eine Automatikfunktion ermöglichen, indem der Rundbügel lediglich in die Geschlossenstellung bewegt werden muss, woraufhin der Riegel automatisch in die Verriegelungsstellung schnappen und den Rundbügel dadurch in der Geschlossenstellung sichern kann.

Der elektromechanische Verriegelungsmechanismus kann bei einigen Ausführungsformen einen Nocken aufweisen, welcher von dem Elektromotor zu einer exzentrischen Drehbewegung um eine Drehachse antreibbar ist, wobei der Nocken durch den Elektromotor in eine Freigabestellung drehbar sein kann und wobei der Riegel durch Drehen des Nockens in die Freigabestellung entgegen der Vorspannung in die Entriegelungsstellung bewegbar sein kann. Zudem kann der Nocken bei einigen Ausführungsformen durch den Elektromotor in eine Vorspannstellung drehbar sein, in welcher der Riegel für eine Bewegung in die Freigabestellung aufgrund der Vorspannung freigegeben ist.

Die Erfindung betrifft ferner ein Fahrrad, insbesondere ein E-Bike, welches einen Fahrradrahmen sowie ein an dem Fahrradrahmen mit einem Befestigungselement, insbesondere einer Schraube, befestigtes Rahmenschloss gemäß der vorliegenden Offenbarung aufweist.

Insbesondere kann das Rahmenschloss an einer Hinterbaustrebe des Fahrradrahmens befestigt sein. Ferner kann das Rahmenschloss insbesondere derart an dem Fahrradrahmen angeordnet sein, dass der Rundbügel in der Geschlossenstellung einen Raum zwischen zwei Speichen eines Laufrads des Fahrrads, insbesondere eines hinteren Laufrads, durchgreift, um hierdurch eine Drehung des Laufrads zu sperren. Hingegen kann das Rahmenschloss dazu ausgebildet sein, in der Offenstellung eine Drehung des Laufrads freizugeben.

Indem das Kabel durch die Kabelaustrittsöffnung an der Innenseite des Rahmenschlosses, die insbesondere dem Laufrad, welches der Rundbügel in der Geschlossenstellung durchgreift, zugewandt sein kann, austritt, kann das austretende Kabel von dem Rahmenschloss verdeckt geführt sein, um einem Hervorrufen von Aufbruchsversuchen durch Durchtrennen des Kabels und dadurch entstehenden Vandalismusschäden vorzubeugen.

Insbesondere bei einer Ausbildung des Fahrrads als E-Bike mit einer Energiequelle zum Antreiben oder Unterstützen eines Antriebs des Fahrrads kann ferner vorgesehen sein, dass das Kabel (direkt oder durch eine Verbindung mit einem Anschlusskabel) mit der Energiequelle verbunden ist, um aus der ohnehin vorhandenen Energiequelle die für den Elektromotor des Rahmenschlosses benötigte elektrische Energie beziehen zu können. Zudem kann gegebenenfalls vorgesehen sein, dass das Kabel mit einer zentralen Steuereinrichtung des Fahrrads, insbesondere E-Bikes, verbunden ist, um hierüber entsprechende Steuersignale für den Elektromotor, insbesondere zum Antreiben des Riegels in die Entriegelungsstellung, empfangen zu können.

Bei einigen Ausführungsformen kann das Kabel des Rahmenschlosses oder ein mit dem Kabel des Rahmenschlosses verbundenes Anschlusskabel durch eine an dem Fahrradrahmen ausgebildete Einführöffnung in den Fahrradrahmen eingeführt sein.

Bei solchen Ausführungsformen kann somit vorgesehen sein, dass das Kabel oder ein damit verbundenes und das Kabel gewissermaßen verlängerndes Anschlusskabel nach dem Austritt aus der Kabelaustrittsöffnung in einen Innenraum des Fahrradrahmens eingeführt wird, um hierdurch vor einem externen Zugriff und einem Erkennen von außen geschützt zu sein. Ein Erkennen des Kabels kann somit ausschließlich zwischen der Kabelaustrittsöffnung und der Einführöffnung erfolgen, wobei jedoch die Anordnung der Kabelaustrittsöffnung an der Innenseite des Rahmenschlosses dazu genutzt werden kann, das Kabel nach dem Austritt aus der Kabelaustrittsöffnung insbesondere entlang der Innenseite des Rahmenschlosses zu der Einführöffnung zu führen, so dass das Rahmenschloss als ein Sichtschutz für das Kabel nach dem Austritt aus der Kabelaustrittsöffnung fungieren kann.

Das Fahrrad kann zudem bei einigen Ausführungsformen ein Schutzblech aufweisen und das aus der Kabelaustrittsöffnung herausgeführte Kabel (oder das Anschlusskabel) kann an einer einem Laufrad des Fahrrads zugewandten Unterseite des Schutzblechs entlanggeführt sein, insbesondere zu der erwähnten Einführöffnung an dem Fahrradrahmen. Insofern kann bei solchen Ausführungsformen vorgesehen sein, auch das Schutzblech als einen Sichtschutz für das austretende Kabel zu nutzen, so dass das Kabel nicht unmittelbar und insbesondere nicht von oben erkannt werden kann. Dabei kann das Schutzblech insbesondere eine gekrümmte Form aufweisen, um sich beidseitig in Richtung des Laufrads oder abschnittsweise um das Laufrad herum erstrecken zu können, so dass das Kabel auch seitlich von dem Schutzblech verdeckt sein kann.

Das Kabel kann bei einigen Ausführungsformen mit einer Steuereinrichtung des Fahrrads verbunden sein, welche dazu ausgebildet ist, ein Freigabesignal zum Ansteuern des Elektromotors zu erzeugen und über das Kabel an den Elektromotor zu übermitteln. Der Elektromotor kann dazu ausgebildet sein, den Elektromotor in Ansprechen auf das Freigabesignal zum Antreiben des Riegels in die Entriegelungsstellung anzutreiben.

Das Kabel kann insbesondere direkt mit der Steuereinrichtung des Fahrrads oder zunächst mit einem zu der Steuereinrichtung führenden Anschlusskabel verbunden sein, um von der Steuereinrichtung generierte Signale an den Elektromotor übermitteln zu können. Die Steuereinrichtung kann beispielsweise dazu ausgebildet sein, Steuerbefehle von einem externen mobilen Gerät, insbesondere von einem Smartphone, zu erhalten, oder die Steuereinrichtung kann eine an dem Fahrrad angebrachte Benutzerschnittstelle, beispielsweise im Bereich eines Lenkers des Fahrrads, aufweisen, um entsprechende Befehle entgegennehmen zu können.

Grundsätzlich kann jedoch auch vorgesehen sein, dass das Rahmenschloss eine Funkeinrichtung zum Empfangen von Steuerbefehlen, insbesondere von Öffnungsbefehlen, von einem mobilen Öffnungsgerät, insbesondere einem Smartphone, aufweist, wobei das Kabel zur Energieversorgung des Elektromotors und der Funkeinrichtung vorgesehen sein kann, um etwa an eine Energiequelle eines Fahrrads, insbesondere eines E-Bikes, angeschlossen werden zu können. Hierbei kann eine Kommunikation beispielsweise über eine Bluetooth-, eine WLAN/WiFi-Verbindung oder eine Mobilfunk-Verbindung erfolgen.

Die Steuereinrichtung des Fahrrads kann bei einigen Ausführungsformen dazu ausgebildet sein, einen Öffnungsbefehl von einem mobilen Öffnungsgerät, insbesondere einem Smartphone, zu empfangen und das Freigabesignal in Ansprechen auf den Öffnungsbefehl an den Elektromotor zu übermitteln. Insofern kann die Steuereinrichtung insbesondere eine Schnittstelle zum Empfangen von Öffnungsbefehlen von dem mobilen Öffnungsgerät bilden und dazu beispielsweise eine Funkeinrichtung aufweisen, um den Öffnungsbefehl insbesondere über eine Bluetooth-Verbindung, eine WLAN/WiFi-Verbindung oder eine Mobilfunk-Verbindung empfangen zu können.

Daher kann die Steuereinrichtung bei einigen Ausführungsformen dazu ausgebildet sein, den Öffnungsbefehl über eine Funkverbindung zu empfangen. Alternativ oder zusätzlich kann das Fahrrad ferner eine Verbindungseinrichtung zum Verbinden des mobilen Öffnungsgeräts mit dem Fahrrad aufweisen und die Steuereinrichtung kann mit der Verbindungseinrichtung, insbesondere über ein Verbindungskabel, verbunden und dazu ausgebildet sein, den Öffnungsbefehl über die Verbindung zu der Verbindungseinrichtung zu empfangen.

Beispielsweise kann eine solche Verbindungseinrichtung eine Koppeleinrichtung zum Einsetzen eines mobilen Öffnungsgeräts aufweisen, um etwa eine Steckverbindung mit dem Smartphone herstellen und von dem Smartphone übermittelte Öffnungsbefehle weiterleiten zu können, insbesondere über ein Verbindungskabel. Alternativ dazu kann die Verbindungseinrichtung auch eine Koppeleinrichtung zum Aufnehmen des mobilen Öffnungsgeräts aufweisen, jedoch dazu ausgebildet sein, entsprechende Befehle für das Rahmenschloss über eine Funkverbindung von dem mobilen Öffnungsgerät zu empfangen und über das Verbindungskabel an die Steuereinrichtung zu übermitteln. Insbesondere kann eine solche Verbindungseinrichtung an einem Lenker des Fahrrads vorgesehen sein, um etwa ein Smartphone koppeln und beispielsweise für eine Navigation nutzen zu können. Zudem kann beispielsweise vorgesehen sein, auch ein gekoppeltes Smartphone über die Verbindungseinrichtung mit elektrischer Energie aus der Energiequelle des Fahrrads zu versorgen.

Die Steuereinrichtung kann bei einigen Ausführungsformen innerhalb des Fahrradrahmens angeordnet sein. Insbesondere kann die Steuereinrichtung bei einigen Ausführungsformen einen Mikroprozessor umfassen. Bei solchen Ausführungsformen kann die Steuereinrichtung zudem insbesondere mit einem außen an dem Fahrrad angeordneten Funkempfänger verbunden sein, um eine Kommunikation über eine Funkverbindung mit einem externen Öffnungsgerät zu ermöglichen, ohne dass die Kommunikation durch den Fahrradrahmen beeinträchtigt ist. Beispielsweise kann der Funkempfänger dazu an der vorstehend erwähnten Verbindungseinrichtung angeordnet sein.

Das Fahrrad kann bei einigen Ausführungsformen als E-Bike ausgebildet sein und eine elektrische Energiequelle aufweisen, wobei eine durch die elektrische Energiequelle bereitgestellte Energieversorgung über das Kabel an den Elektromotor übermittelbar sein kann.

Grundsätzlich kann das Rahmenschloss ferner ebenfalls eine Steuereinrichtung, beispielsweise einen Mikroprozessor, aufweisen, um insbesondere empfangene Befehle zum Ansteuern des Elektromotors umsetzen zu können.

Die Erfindung wird im Folgenden rein beispielhaft anhand eines Ausführungsbeispiels unter Bezugnahme auf die Zeichnungen erläutert.

Es zeigen:
- Fig. 1A und 1B: zur Veranschaulichung der grundsätzlichen Funktionsweise eines elektronischen Rahmenschlosses eine jeweilige Darstellung eines Rahmenschlosses mit elektromechanischem Verriegelungsmechanismus aus dem Stand der Technik bei unterschiedlicher Stellung eines Riegels und eines Rundbügels des Rahmenschlosses,
- Fig. 2A und 2B: eine jeweilige perspektivische Darstellung eines Rahmenschlosses gemäß der vorliegenden Offenbarung bei angebrachtem Außengehäuse bzw. bei entnommenem Außengehäuse,
- Fig. 3: eine weitere perspektivische Darstellung des Rahmenschlosses mit angebrachten Schutzkappen zum Überdecken von Befestigungsabschnitten des Rahmenschlosses,
- Fig. 4: eine weitere perspektivische Darstellung eines Abschnitts des Rahmenschlosses zur Veranschaulichung einer Verbindung eines aus dem Rahmenschloss austretenden Kabels mit einem Anschlusskabel und
- Fig. 5: eine schematische Darstellung eines Fahrrads mit daran angebrachtem Rahmenschloss.

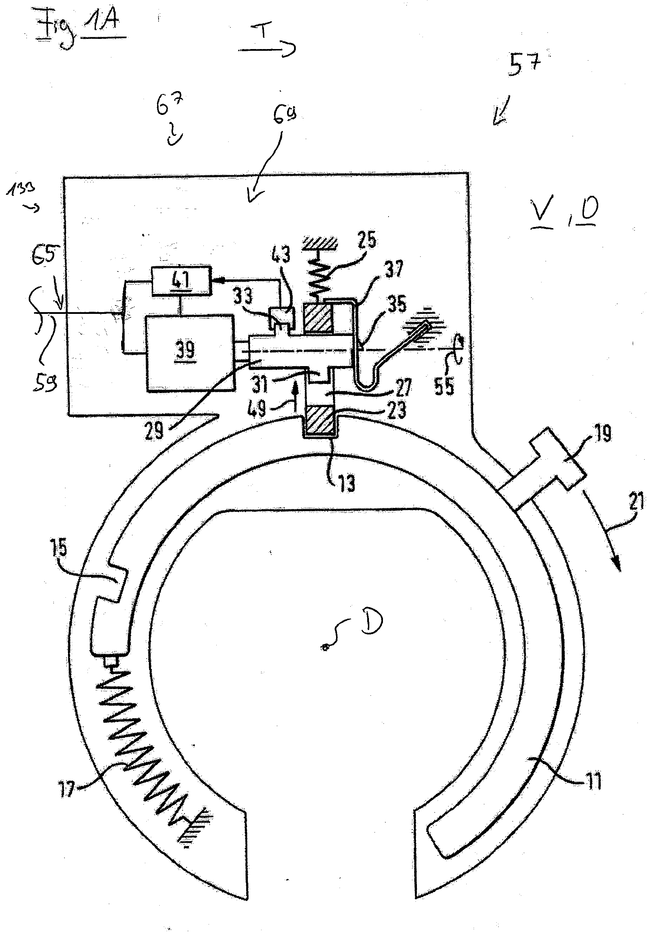

Fig. 1A zeigt schematisch den Aufbau eines Rahmenschlosses 57 zur Montage an den Hinterradstreben eines Fahrrads gemäß dem Stand der Technik DE 10 2005 041 268 A1. Das Rahmenschloss 57 besitzt einen um eine Drehachse D drehbaren Rundbügel 11 zum Umgreifen des Hinterrads sowie einen Schlosskörper 67. Der Rundbügel 11 besitzt eine Offenstellung-Eingriffsvertiefung 13 sowie eine Geschlossenstellung-Eingriffsvertiefung 15 und ist mittels einer Zugfeder 17 in Richtung einer in Fig. 1A gezeigten Offenstellung O vorgespannt. Solange der Rundbügel 11 nicht verriegelt ist, kann er mittels einer Handhabe 19 entgegen der Vorspannung entlang einer Schließrichtung 21 in Richtung einer Geschlossenstellung G gedreht werden. Alternativ oder zusätzlich zu einer solchen manuell zu betätigenden Handhabe 19 kann bei einigen Ausführungsformen auch ein (nicht gezeigter) Elektromotor zum Antreiben des Rundbügels 11 von der Offenstellung O in die Geschlossenstellung G (und/oder umgekehrt) vorgesehen sein.

Mit dem Rundbügel 11 wirkt ein Riegel 23 eines elektromechanischen Verriegelungsmechanismus 69 zusammen, der von einer Druckfeder 25 in Richtung einer in Fig. 1A gezeigten Verriegelungsstellung V vorgespannt ist. Der Riegel 23 besitzt eine zentrale Ausnehmung 27. In diese greift eine Welle 29 ein, die im Bereich des Riegels 23 einen Entriegelungsnocken 31 besitzt. An einem anderen Längsabschnitt besitzt die Welle 29 einen Schaltnocken 33. Die Vorderseite der Welle 29 ist als eine exzentrisch angeordnete schräge Fläche in Form einer Freigabenase 35 ausgebildet. Diese wirkt mit einer Blockierfeder 37 zusammen, wie nachfolgend noch erläutert wird.

Als Antriebseinrichtung für die Welle 29 ist ein Elektromotor 39 vorgesehen, der vorzugsweise ein integriertes oder aufgesetztes Getriebe für eine Übersetzung ins Langsame besitzt (nicht gezeigt) und sich in im Wesentlichen tangentialer Richtung T bezüglich des Rundbügels 11 erstreckt. Der Elektromotor 39 wird von einer Steuereinrichtung 41 angesteuert. Diese ist eingangsseitig mit einem Kontaktschalter 43 verbunden, der mit dem Schaltnocken 33 der Welle 29 zusammenwirkt.

Das in Fig. 1A gezeigte Rahmenschloss 57 dient zum Sichern des zugehörigen Fahrrads gegen eine unbefugte Benutzung. Hierfür kann der Rundbügel 11 ausgehend von der gezeigten Offenstellung O in eine Geschlossenstellung G gebracht werden, in der der Rundbügel 11 in einen Zwischenraum zwischen zwei benachbarten Speichen des Hinterrads eingreift und das Hinterrad hierdurch blockiert.

Der Rundbügel 11 kann sowohl in der gezeigten Offenstellung O als auch in der genannten Geschlossenstellung G mittels des Riegels 23 verriegelt werden. Hierfür drängt die Druckfeder 25 den Riegel 23 in Richtung des Rundbügels 11. Solange die Welle 29 mit dem Entriegelungsnocken 31 den Riegel 23 hierfür freigibt, liegt der Riegel 23 deshalb an der Oberseite des Rundbügels 11 an oder greift in eine der beiden Eingriffsvertiefungen 13, 15 ein, falls diese sich auf Höhe des Riegels 23 befinden. Wenn der Riegel 23 in die Offenstellung-Eingriffsvertiefung 13 eingreift, ist der Rundbügel 11 in der Offenstellung O gesichert, wie in Fig. 1A gezeigt ist. Falls hingegen der Riegel 23 in die Geschlossenstellung-Eingriffsvertiefung 15 eingreift, so entspricht dies der genannten Geschlossenstellung G des Rundbügels 11.

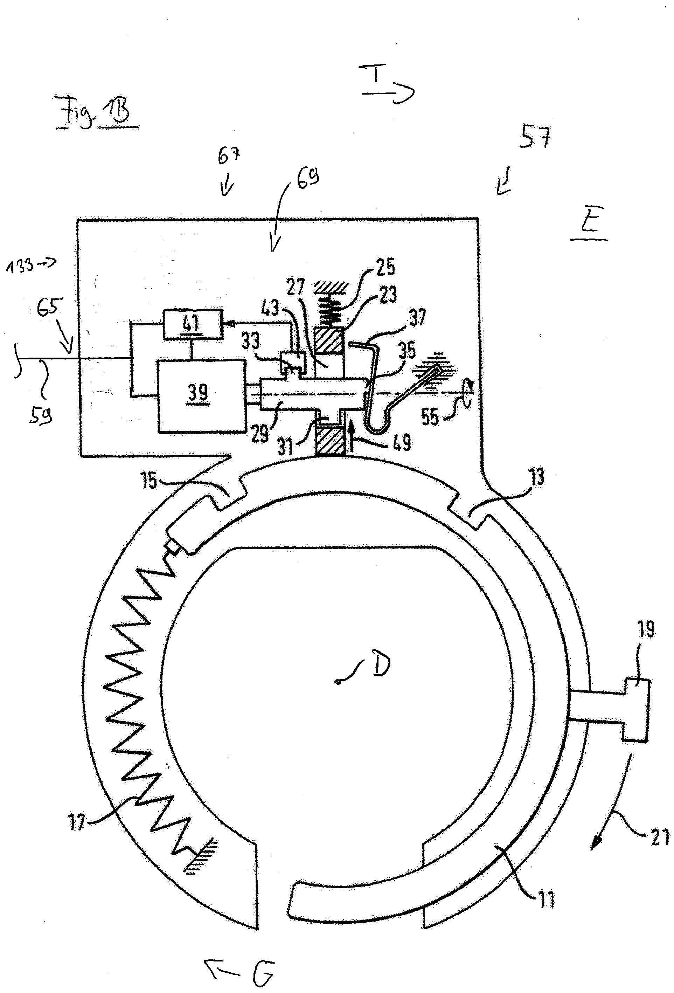

Durch Drehen der Welle 29 kann der Riegel 23 mittels des Entriegelungsnockens 31 kurzzeitig entlang einer Entriegelungsrichtung 49 entgegen der Vorspannung durch die Druckfeder 25 in eine Entriegelungsstellung E gebracht werden. In dieser Entriegelungsstellung E ist der Rundbügel 11 für eine Drehbewegung freigegeben. Insbesondere kann der Benutzer ausgehend von der Offenstellung O gemäß Fig. 1A den Rundbügel 11 mittels der Handhabe 19 entlang der Schließrichtung 21 bewegen, um den Rundbügel 11 letztlich in die bereits erläuterte Geschlossenstellung G zu überführen. Fig. 1B zeigt das Rahmenschloss 57 während einer derartigen Bewegung des Rundbügels 11 in Schließrichtung 21. Falls zu diesem Zeitpunkt der Entriegelungsnocken 31 der Welle 29 den Riegel 23 bereits wieder freigibt und die Druckfeder 25 den Riegel 23 somit erneut in Richtung des Rundbügels 11 drängt, so beeinträchtigt dies nicht die weitere Schließbewegung des Rundbügels 11. Wie in Fig. 1B gezeigt ist, liegt der Riegel 23 nämlich lediglich so lange an der Oberseite des Rundbügels 11 an, bis die Geschlossenstellung-Eingriffsvertiefung 15 sich auf Höhe des Riegels 23 befindet. Sodann kann der Riegel 23 in die Geschlossenstellung-Eingriffsvertiefung 15 einschnappen, um den Rundbügel 11 in der somit erreichten Geschlossenstellung G zu sichern.

Aus Fig. 1B ist auch die folgende Eigenschaft des gezeigten Rahmenschlosses 57 ersichtlich: Falls der Benutzer während der Schließbewegung des Rundbügels 11 - also während der Riegel 23 sich zwischen der Offenstellung-Eingriffsvertiefung 13 und der Geschlossenstellung-Eingriffsvertiefung 15 befindet - die Schließbetätigung nicht vollendet und der Riegel 23 somit nicht in Eingriff mit der Geschlossenstellung-Eingriffsvertiefung 15 gelangt, so zieht die Zugfeder 17 den Rundbügel 11 wieder zurück in die in Fig. 1A gezeigte Offenstellung O, wobei der Riegel 23 aufgrund seiner Vorspannung sodann in die Offenstellung-Eingriffsvertiefung 13 schnappt (vgl. Fig. 1A). Der Rundbügel 11 ist hierdurch auch in diesen Fall gegen eine unbefugte oder unbeabsichtigte nachfolgende Schließbetätigung gesichert. Gleiches gilt auch für den Fall, dass in der in Fig. 1A gezeigten Offenstellung O des Rundbügels 11 der Riegel 23 infolge eines vom Benutzer abgesetzten Schließbefehls zwar kurzzeitig entriegelt wird, der Rundbügel 11 während dieses Zeitintervalls jedoch überhaupt nicht in Schließrichtung 21 gedreht wird. In diesem Fall verbleibt der Rundbügel 11 also in der Offenstellung O, und der Riegel 23 greift sofort wieder in die Offenstellung-Eingriffsvertiefung 13 ein, sobald der Riegel 23 aufgrund einer entsprechenden Drehbewegung der Welle 29 hierfür freigegeben worden ist.

Eine weitere Besonderheit des gezeigten Rahmenschlosses 57 liegt in der Blockierfeder 37. Solange der Riegel 23 sich - wie in Fig. 1A gezeigt - in der Verriegelungsstellung V befindet, hintergreift die Blockierfeder 37 den Riegel 23. Dies gilt sowohl für die in Fig. 1A gezeigte Offenstellung O als auch für die erläuterte Geschlossenstellung G des Rundbügels 11. Solange die Blockierfeder 37 den Riegel 23 derartig hintergreift, ist dieser gegen eine unbefugte Entriegelungsbewegung nach der sogenannten "Hammerschlagmethode" gesichert. Um den Riegel 23 für eine (befugte) Bewegung in der Entriegelungsrichtung 49 freizugeben, wird die Blockierfeder 37 entgegen der von ihr ausgeübten Vorspannung kurzzeitig zurückgedrängt, um das freie Ende der Blockierfeder 37 außer Eingriff mit dem Riegel 23 zu bringen. Hierfür greift die Freigabenase 35 der Welle 29 an einer Zwangsführungsfläche 51 der Blockierfeder 37 an, die eine Blockieraussparung 53 der Blockierfeder 37 umgibt. Sobald die Freigabenase 35 jedoch in die Blockieraussparung 53 eingreift, kann die Blockierfeder 37 aufgrund ihrer Vorspannung den Riegel 23 in der erläuterten Weise hintergreifen (vgl. Fig. 1A).

In dem Zustand gemäß Fig. 1B liegt die Blockierfeder 37 übrigens noch seitlich an dem Riegel 23 an. Sobald jedoch der Riegel 23 sich wieder vollständig die Verriegelungsstellung V begibt, schnappt die Blockierfeder 37 in die in Fig. 1A gezeigte Blockierstellung und hintergreift den Riegel 23 wieder.

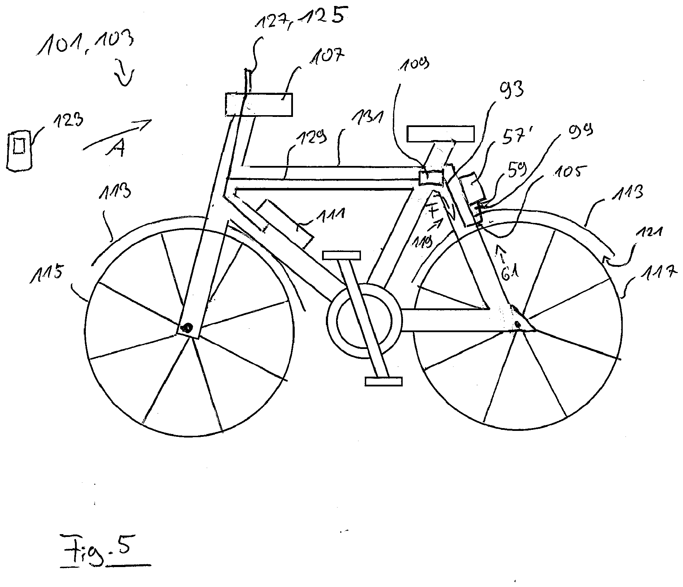

Um den Elektromotor 39 und die Steuereinrichtung 41 mit elektrischer Energie versorgen und/oder Steuersignale an die Steuereinrichtung 41 übermitteln zu können, sind die Steuereinrichtung 41 und der Elektromotor 39 mit einem Kabel 59 verbunden, welches aus dem Schlosskörper 67 des Rahmenschlosses 57 herausgeführt ist. Wie etwa Fig. 5 zeigt, kann das Kabel 59 beispielsweise mit einer elektrischen Energiequelle 111 eines Fahrrads 101 verbunden werden, so dass die von der Energiequelle 111 bereitgestellte Energie auch für das Rahmenschloss 57 genutzt werden kann. Aufgrund der Ausrichtung des Elektromotors 39 entlang der tangentialen Richtung T bezogen auf den Rundbügel 11 ist auch das Kabel 59 gemäß diesem Stand der Technik entlang der tangentialen Richtung T geführt und verlässt den Schlosskörper 67 somit an einer Stirnseite 133.

Ein Problem bei einer solchen Führung des Kabels 59 liegt jedoch darin, dass das Kabel 59 an der Außenseite des Rahmenschlosses 57 sichtbar ist. Ein solches freiliegendes Kabel 59 kann den Eindruck erwecken, das Rahmenschloss 57 durch Durchtrennen des Kabels 59 manipulieren zu können, so dass solche Kabel 59 im Zuge von Aufbruchsversuchen häufig beschädigt werden können. Auch wenn der Riegel 23 hierdurch nicht bewegt wird und das Rahmenschloss 57 somit sicher in der Geschlossenstellung G verbleiben kann, kann das Rahmenschloss 57 nach einer solchen Beschädigung des Kabels 59 auch für einen berechtigten Nutzer nicht mehr zu betätigen sein, so dass das Rahmenschloss 57 durch den berechtigten Benutzer letztlich entfernt und beschädigt werden muss, um das Fahrrad 101 wieder nutzen zu können.

Während die grundsätzliche Funktionsweise des Rahmenschlosses 57 somit übernommen werden kann, wird diesem Problem in der vorliegenden Offenbarung begegnet.

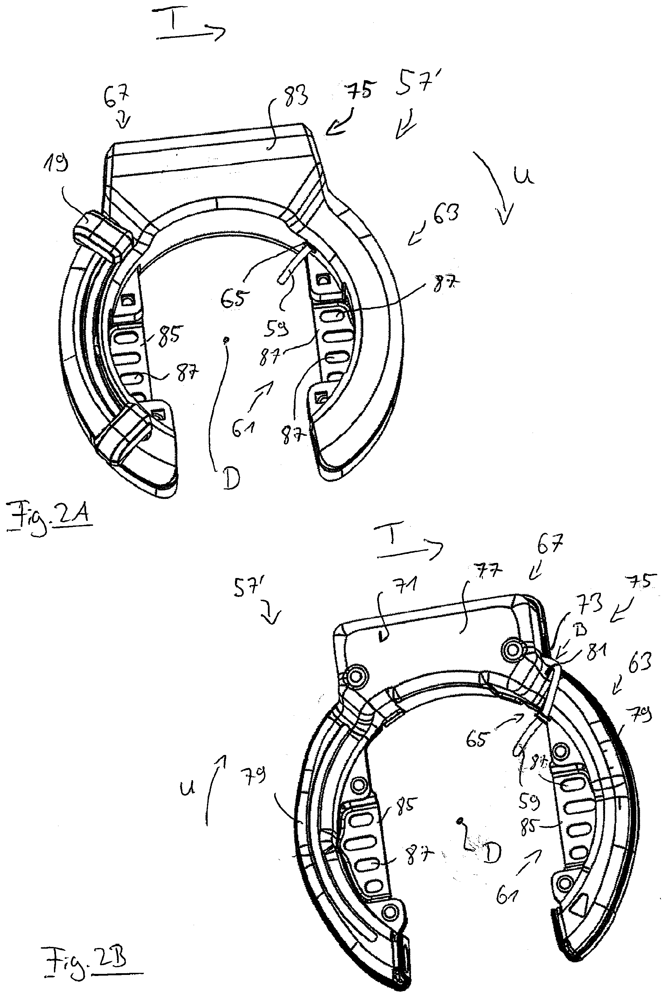

Fig. 2A veranschaulicht ein solches Rahmenschloss 57' gemäß einer Ausführungsform der vorliegenden Offenbarung, bei welchem das Kabel 59 nicht tangential an einer Stirnseite 75 des Schlosskörpers 67, sondern an einer bezogen auf eine Umfangsrichtung U des Rundbügels 11 radial innenliegenden Innenseite 61 des Schlosskörpers 67 aus einer dort angeordneten Kabelaustrittsöffnung 65 austritt. Die Innenseite 61 kann dabei insbesondere auch bezogen auf eine Drehachse D des Rundbügels 11 radial innenliegend angeordnet sein, wohingegen der Schlosskörper 67 eine der Innenseite 61 entgegengesetzte und radial bezüglich der Umfangsrichtung U oder der Drehachse D außenliegende Außenseite 63 aufweist.

Eine derartige Führung des Kabels 59 kann es insbesondere ermöglichen, den Schlosskörper 67 dazu zu nutzen, das aus der Kabelaustrittsöffnung 65 austretende Kabel 59 zu verdecken und versteckt zu führen, so dass das Kabel 59 vor einem unmittelbaren Erkennen geschützt werden kann.

Ferner zeigt Fig. 2A, dass auch bei dem hier offenbarten Rahmenschloss 57' insbesondere eine Handhabe 19 vorgesehen sein kann, um den in Fig. 2A nicht sichtbaren, sich in der Offenstellung O befindlichen Rundbügel 11 in die Geschlossenstellung G überführen zu können. Darüber hinaus sind an dem Rahmenschloss 57' zwei einander entgegengesetzte Befestigungsabschnitte 85 mit jeweiligen Befestigungsöffnungen 89 vorgesehen, so dass das Rahmenschloss 57' mittels einer jeweiligen durch Befestigungsöffnungen 89 der Befestigungsabschnitte 85 hindurchgeführten Schraube an einem Fahrradrahmen 131 und insbesondere den Hinterbaustreben 119 eines Fahrrads 101 befestigt werden kann (vgl. auch Fig. 5). Hierbei sind an jedem der Befestigungsabschnitte 85 mehrere Befestigungsöffnung 89 vorgesehen, um ein flexibles Befestigen des Rahmenschlosses 57' in Abhängigkeit von der jeweiligen Einbausituation und der Konfiguration des Fahrrads 101, an welchem das Rahmenschloss 57' befestigt wird, zu ermöglichen.

Fig. 2A zeigt das Rahmenschloss 57' zudem mit einem Außengehäuse 83, welches insbesondere als eine Kunststoffverkleidung fungieren und somit die äußere Gestaltung des Rahmenschlosses 57' bestimmen kann. Fig. 2B veranschaulicht das Rahmenschloss 57' hingegen bei entnommenem Außengehäuse 83, wobei ersichtlich wird, dass das Rahmenschloss 57' ferner ein Schlossgehäuse 71 mit einem zentralen Gehäuseabschnitt 77 aufweist, in welchem der Elektromotor 39 sowie der Riegel 23 zum Verriegeln des Rundbügels 11 angeordnet sind (vgl. hierzu auch Fig. 1A und 1B). Der zentrale Gehäuseabschnitt 77 erstreckt sich insbesondere entlang der tangentialen Richtung T bezüglich der Umfangsrichtung U und somit tangential zu dem Rundbügel 11. Das Schlossgehäuse 71 kann insbesondere aus Metall und/oder Stahl gefertigt sein und der sicheren Aufnahme der Komponenten des Verriegelungsmechanismus 69 gegenüber einem unbefugten Zugriff dienen.

Ferner ist an dem zentralen Gehäuseabschnitt 77 und damit an dem Schlossgehäuse 71 eine Gehäuseöffnung 73 ausgebildet, durch welche das Kabel 59 zunächst in im Wesentlichen tangentialer Richtung T und somit an der Stirnseite 75 aus dem Schlossgehäuse 71 austritt. Nach dem Austritt aus dem Schlossgehäuse 71 ist das Kabel 59 jedoch entlang einer Gehäusebiegung 81 geführt, welche den zentralen Gehäuseabschnitt 77 mit einem Führungsabschnitt 79 zur Führung des Rundbügels 11 verbindet und welche einen Biegeradius B des Kabels 59 bestimmt, so dass das Kabel 59 letztlich an der Innenseite 61 durch die Kabelaustrittsöffnung 65 austreten kann.

Indem das Schlossgehäuse 71 eine Gehäuseöffnung 73 aufweist, kann das Kabel 59 somit zunächst in tangentialer Richtung T aus dem inneren Schlossgehäuse 71 herausgeführt werden, so dass das Kabel 59 nicht bereits innerhalb des zentralen Gehäuseabschnitts 77 umgelenkt werden muss, um an der Innenseite 61 des Schlosskörpers 67 austreten zu können. Eine solche Umlenkung bereits in dem zentralen Gehäuseabschnitt 77 würde entweder einen geringen Biegeradius B oder sogar einen Knick des Kabels 59 bedingen, wodurch dieses beschädigt werden könnte, oder es müsste eine Vergrößerung des zentralen Gehäuseabschnitts 77 in tangentialer Richtung T erfolgen, um das Kabel 59 bei angemessen großem Biegeradius B zu der Innenseite 61 führen zu können. Aufgrund der Führung des Kabels 59 in tangentialer Richtung T aus dem zentralen Gehäuseabschnitt 77 heraus und der erst darauffolgenden Umlenkung entlang der Gehäusebiegung 81 kann der Biegeradius B des Kabels 59 hingegen ausreichend groß gestaltet werden, ohne dass eine ungewünschte Vergrößerung des zentralen Gehäuseabschnitts 77 erforderlich ist. Indem das Schlossgehäuse 71 im vollständig montierten Zustand des Rahmenschlosses 57' zudem durch das Außengehäuse 83 bedeckt sein kann, kann das Kabel 59 bis zu der Kabelaustrittsöffnung 65 vollkommen umschlossen und somit von außen nicht sichtbar geführt sein.

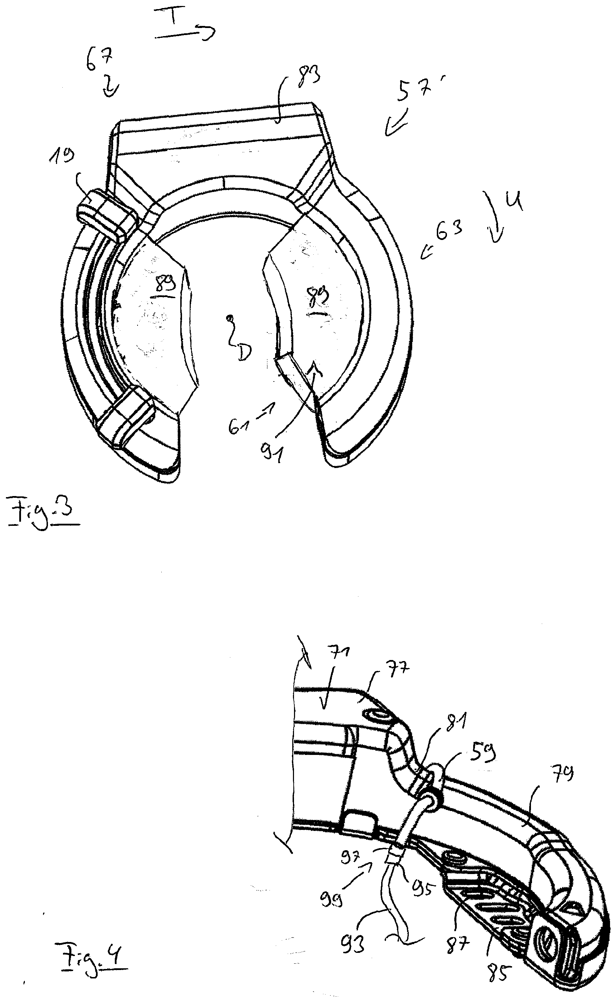

Fig. 3 veranschaulicht ferner, dass das Rahmenschloss 57' darüber hinaus Schutzkappen 89 aufweisen kann, um die Befestigungsabschnitte 85, insbesondere nach einer Montage an dem Fahrrad 101, verdecken zu können. Auch solche Schutzkappen 89 können insbesondere aus Kunststoff gefertigt sein.

Während ein solches Verdecken der Befestigungsabschnitte 85 grundsätzlich bekannt ist, sind die Schutzkappen 89 bei der gezeigten Ausführungsform im Vergleich zu herkömmlichen Schutzkappen mit einer größeren Erstreckung entlang der Drehachse D und somit einer größeren Höhe gefertigt, so dass das aus der Kabelaustrittsöffnung 65 austretende Kabel 59 in einen Innenraum 91 geführt werden kann, welcher durch die Schutzkappe 89, den Begrenzungsabschnitt 85 und die Innenseite 61 des Schlosskörpers 67, insbesondere des Außengehäuses 83, begrenzt ist. Daher kann auch das aus der Kabelaustrittsöffnung 65 ausgetretene Kabel 59 von außen weiterhin nicht sichtbar in dem Innenraum 91 geführt sein.

Fig. 4 zeigt ferner, dass das aus dem Schlosskörper 67 austretende Kabel 59 zudem durch eine von einer Buchse 97 und einem Stecker 95 gebildete Stecker-Buchse-Verbindung 99 mit einem Anschlusskabel 93 verbunden sein kann, um beispielsweise eine Energieversorgung oder Steuersignale auf das verhältnismäßig kurz ausgebildete Kabel 59 leiten zu können. Die Stecker-Buchse-Verbindung 99 ist dabei so gestaltet, dass der Stecker 95 des Anschlusskabels 93 insbesondere durch eine der Befestigungsöffnungen 89 in den Innenraum 91 geführt werden kann, so dass auch die Stecker-Buchse-Verbindung 99 in dem Innenraum 91 und daher von außen nicht erkennbar angeordnet sein kann.

Darüber hinaus kann vorgesehen sein, dass lediglich eine der mehreren Befestigungsöffnung 89 dazu erforderlich ist, das Rahmenschloss 57' an dem Fahrradrahmen 131 zu befestigen, so dass bei der hier veranschaulichten Ausführungsform insgesamt drei Befestigungsöffnungen 89 frei bleiben können. Dies kann es ermöglichen, das Kabel 59 und/oder das Anschlusskabel 93 durch eine solche freibleibende Befestigungsöffnung 89 hindurchzuführen, um das Kabel 59 oder das Anschlusskabel 93 beispielsweise unmittelbar in den Fahrradrahmen 131 einführen zu können, wenn korrespondierend zu der betreffenden freibleibenden Befestigungsöffnung 89 an dem Fahrradrahmen 131 eine Einführöffnung 105 für das Kabel 59 oder das Anschlusskabel 93 vorgesehen ist (vgl. auch Fig. 5). Bei solchen Ausführungsformen kann im montierten Zustand des Rahmenschlosses 57' somit erreicht werden, dass das Kabel 59 in keinem Abschnitt frei sichtbar geführt ist, sondern stets von dem Innengehäuse 71, dem Außengehäuse 83 oder der Schutzkappe 89 umgeben ist, bevor das Kabel 59 (oder ein damit verbundenes Anschlusskabel 93) in den Fahrradrahmen 131 eingeführt und daher ebenfalls nicht sichtbar ist.

Fig. 5 veranschaulicht darüber hinaus eine beispielhafte Konfiguration eines Fahrrads 101, welches beispielhaft als E-Bike 103 ausgebildet ist und eine elektrische Energiequelle 111, insbesondere Batterie, zum Unterstützen bei einem Antreiben des Fahrrads 101 aufweist. Zudem weist das Fahrrad 101 ein vorderes Laufrad 115 und ein hinteres Laufrad 117 sowie einen Fahrradrahmen 131 auf, wobei an Hinterbaustreben 119 des Fahrradrahmens 131 ein Rahmenschloss 57' gemäß der vorliegenden Offenbarung derart befestigt ist, dass das Rahmenschloss 57' bei in der Geschlossenstellung G positioniertem Rundbügel 11 das hintere Laufrad 117 durchgreift und dadurch gegen eine Drehung blockiert.

Ferner ist in Fig. 5 schematisch illustriert, dass das Kabel 59 an der Innenseite 61 des Rahmenschlosses 57' austritt und an der Stecker-Buchse-Verbindung 99 mit einem Anschlusskabel 93 verbunden ist. Der besseren Übersichtlichkeit halber und aufgrund der lediglich schematischen Darstellung sind insbesondere keine Befestigungsabschnitte 85 und auch keine Schutzkappen 89 dargestellt. Zudem kann die Stecker-Buchse-Verbindung 99 grundsätzlich auch weiter entfernt von dem Rahmenschloss 57' gebildet sein.

Das mit dem Kabel 59 verbundene Anschlusskabel 93 wird bei der gezeigten Ausführungsform zu einer Unterseite 121 eines an dem hinteren Laufrad 117 angeordneten Schutzblechs 113 und entlang der Unterseite 121 zu einer an dem Fahrradrahmen 131 vorgesehenen Einführöffnung 105 geführt, wo das Anschlusskabel 93 in den Fahrradrahmen 131 eintritt. Von der Einführöffnung 105 ist das Anschlusskabel 93 zu einer in dem Fahrradrahmen 131 angeordneten Steuereinrichtung 109 geführt, welche wiederum über ein Verbindungskabel 129 mit der elektrischen Energiequelle 111 sowie einer Verbindungseinrichtung 127 verbunden ist.

Die Verbindungseinrichtung 127 weist insbesondere eine Funkeinrichtung 125 auf, um von einem mobilen Öffnungsgerät 123, insbesondere einem Smartphone, einen Öffnungsbefehl A zum Überführen des Rahmenschlosses 57' in die Offenstellung O empfangen zu können. Die Verbindungseinrichtung 127 kann dazu ausgebildet sein, einen empfangenen Öffnungsbefehl A an die Steuereinrichtung 109 zu übermitteln, welche wiederum dazu ausgebildet sein kann, infolgedessen einen Freigabebefehl F über das Anschlusskabel 83 und das Kabel 59 an das Rahmenschloss 57' und dessen Steuereinrichtung 41 und/oder den Elektromotor 39 zu übermitteln, woraufhin der Elektromotor 39 den Riegel 31 in die Entriegelungsstellung E antreiben kann. Darüber hinaus kann die Verbindungseinrichtung 127 insbesondere dazu ausgebildet sein, das mobile Öffnungsgerät 123 aufzunehmen und/oder mechanisch zu koppeln, um das mobile Öffnungsgerät 123 beispielsweise während einer Fahrt mit dem Fahrrad 101 zur Navigation nutzen zu können.

Zudem kann aufgrund der Verbindung der elektrischen Energiequelle 111 über das Verbindungskabel 129, das Anschlusskabel 93 und das Kabel 59 zu dem Rahmenschloss 57' unmittelbar die ohnehin vorgesehene elektrische Energiequelle 111 auch zum Betreiben des Rahmenschlosses 57' genutzt werden, so dass auf eine eigenständige Energieversorgung des Rahmenschlosses 57' verzichtet werden kann.

### Bezugszeichenliste

- 11: Rundbügel
- 13: Offenstellung-Eingriffsvertiefung
- 15: Geschlossenstellung-Eingriffsvertiefung
- 17: Zugfeder
- 19: Handhabe
- 21: Schließrichtung
- 23: Riegel
- 25: Druckfeder
- 27: Ausnehmung
- 29: Welle
- 31: Entriegelungsnocken
- 33: Schaltnocken
- 35: Freigabenase
- 37: Blockierfeder
- 39: Elektromotor
- 41: Steuereinrichtung
- 43: Kontaktschalter
- 49: Entriegelungsrichtung
- 51: Zwangsführungsfläche
- 53: Blockieraussparung
- 55: Drehrichtung
- 57: Rahmenschloss
- 57': Rahmenschloss
- 59: Kabel
- 61: Innenseite
- 63: Außenseite
- 65: Kabelaustrittsöffnung
- 67: Schlosskörper
- 69: Verriegelungsmechanismus
- 71: Schlossgehäuse
- 73: Gehäuseöffnung
- 75: Stirnseite
- 77: zentraler Gehäuseabschnitt
- 79: Führungsabschnitt
- 81: Gehäusebiegung
- 83: Außengehäuse
- 85: Befestigungsabschnitt
- 87: Befestigungsöffnung
- 89: Schutzkappe
- 91: Innenraum
- 93: Anschlusskabel
- 95: Stecker
- 97: Buchse
- 99: Stecker-Buchse-Verbindung
- 101: Fahrrad
- 103: E-Bike
- 105: Einführöffnung
- 107: Lenker
- 109: Steuereinrichtung
- 111: Energiequelle
- 113: Schutzblech
- 115: Laufrad
- 117: Laufrad
- 119: Hinterbaustrebe
- 121: Unterseite
- 123: mobiles Öffnungsgerät
- 125: Funkeinrichtung
- 127: Verbindungseinrichtung
- 129: Verbindungskabel
- 131: Fahrradrahmen
- 133: Stirnseite
- A: Öffnungsbefehl
- B: Biegeradius
- D: Drehachse
- E: Entriegelungsstellung
- F: Freigabesignal
- G: Geschlossenstellung
- O: Offenstellung
- T: tangentiale Richtung
- U: Umfangsrichtung
- V: Verriegelungsstellung

## Patentansprüche

1. Elektronisches Rahmenschloss (57') für ein Fahrrad (101), insbesondere für ein E-Bike (103),
umfassend
- einen zwischen einer Offenstellung (O) und einer Geschlossenstellung (G) drehbaren Rundbügel (11),
- einen Schlosskörper (67),
- einen elektromechanischen Verriegelungsmechanismus (69) mit einem zwischen einer Verriegelungsstellung (V) und einer Entriegelungsstellung (E) beweglichen Riegel (23) und mit einem Elektromotor (39),
wobei der Riegel (23) dazu ausgebildet ist, in der Verriegelungsstellung (V) den in der Geschlossenstellung (G) positionierten Rundbügel (11) gegen eine Bewegung in die Offenstellung (O) zu sichern, und
wobei der Elektromotor (39) dazu ausgebildet ist, den Riegel (23) zum Freigeben einer Bewegung des Rundbügels (11) in die Offenstellung (O) zu einer Bewegung aus der Verriegelungsstellung (V) in die Entriegelungsstellung (E) anzutreiben, und
- ein Kabel (59) zum Empfangen eines Steuersignals und/oder einer Energieversorgung für den Elektromotor (39),
wobei das Rahmenschloss (57') eine bezogen auf eine Umfangsrichtung (U) des Rundbügels (11) radial innenliegende Innenseite (61) und eine bezogen auf die Umfangsrichtung (U) des Rundbügels (11) radial außenliegende Außenseite (63) aufweist, **dadurch gekennzeichnet, dass**
der Schlosskörper (67) eine an der Innenseite (61) gelegene Kabelaustrittsöffnung (65) aufweist, durch welche das Kabel (59) aus dem Schlosskörper (67) austritt.

2. Elektronisches Rahmenschloss (57') nach Anspruch 1,
wobei der Schlosskörper (67) ein Schlossgehäuse (71) aufweist, innerhalb dessen der Elektromotor (39) angeordnet ist, und wobei das Schlossgehäuse (71) eine Gehäuseöffnung (73) aufweist, durch welche das Kabel (59) in einer bezogen auf die Umfangsrichtung (U) im Wesentlichen tangentialen Richtung (T) aus dem Schlossgehäuse (71) austritt.

3. Elektronisches Rahmenschloss (57') nach Anspruch 2,
wobei das Schlossgehäuse (71) einen im Wesentlichen tangential zu dem Rundbügel (11) ausgerichteten zentralen Gehäuseabschnitt (77) aufweist, wobei die Gehäuseöffnung (73) an einer Stirnseite (75) des zentralen Gehäuseabschnitts (77) angeordnet ist, insbesondere wobei der Elektromotor (39) in dem zentralen Gehäuseabschnitt (77) und/oder tangential zu dem Rundbügel (11) ausgerichtet ist.

4. Elektronisches Rahmenschloss (57') nach Anspruch 3,
wobei das Schlossgehäuse (71) sich von dem zentralen Gehäuseabschnitt (77) weg und in Umfangsrichtung (U) des Rundbügels (11) erstreckende Führungsabschnitte (79) zur Führung des Rundbügels (11) aufweist.

5. Elektronisches Rahmenschloss (57') nach einem der Ansprüche 2 bis 4,
wobei das Schlossgehäuse (71) eine sich an die Gehäuseöffnung (73) anschließende Gehäusebiegung (81) aufweist, entlang welcher das aus der Gehäuseöffnung (73) austretende Kabel (59) zu der Kabelaustrittsöffnung (65) geführt ist,
wobei die Gehäusebiegung (81) insbesondere einen Biegeradius (B) für eine Führung des Kabels (59) zu der Kabelaustrittsöffnung (65) bestimmt.

6. Elektronisches Rahmenschloss (57') nach einem der Ansprüche 2 bis 5,
wobei das Schlossgehäuse (71) zumindest abschnittweise in einem Außengehäuse (83) aufgenommen ist, wobei das Außengehäuse (83) die Kabelaustrittsöffnung (65) aufweist,
wobei das Außengehäuse (83) insbesondere ein Kunststoffgehäuse ist.

7. Elektronisches Rahmenschloss (57') nach einem der vorhergehenden Ansprüche,
wobei das Rahmenschloss (57') einen Befestigungsabschnitt (85) mit zumindest einer Befestigungsöffnung (87) zum Befestigen, insbesondere Verschrauben, des Rahmenschlosses (57') an einem Rahmen des Fahrrads (101) mittels eines Befestigungselements, insbesondere einer Schraube, aufweist.

8. Elektronisches Rahmenschloss (57') nach Anspruch 7,
wobei der Befestigungsabschnitt (85) durch eine Schutzkappe (89) überdeckt ist, wobei das Kabel (59) aus der Kabelaustrittsöffnung (65) in einen von dem Befestigungsabschnitt (85) und der Schutzkappe (89) begrenzten Innenraum (91) eingeführt ist.

9. Elektronisches Rahmenschloss (57') nach Anspruch 7 oder 8,
wobei der Befestigungsabschnitt (85) zumindest zwei Befestigungsöffnungen (87), insbesondere genau zwei, genau drei oder genau vier Befestigungsöffnungen (87), aufweist,
wobei das Befestigungselement zum Befestigen des Rahmenschlosses (57') an dem Fahrrad (101) durch eine erste der zumindest zwei Befestigungsöffnungen (87) führbar ist und wobei eine zweite der zumindest zwei Befestigungsöffnungen (87) dazu vorgesehen ist, bei einer Befestigung des Rahmenschlosses (57') an dem Fahrrad (101) freizubleiben, wobei das Kabel (59) durch die zweite Befestigungsöffnung (87) hindurchführbar ist oder wobei ein mit dem Kabel (59) verbindbares Anschlusskabel (93) zum Herstellen einer Verbindung mit dem Kabel (59) durch die zweite Befestigungsöffnung (87) hindurchführbar ist.

10. Elektronisches Rahmenschloss (57') nach Anspruch 9,
wobei das Kabel (59) durch eine Stecker-Buchse-Verbindung (99) mit dem Anschlusskabel (93) verbindbar ist, wobei ein Stecker (95) der Stecker-Buchse-Verbindung (99) und/oder eine Buchse (97) der Stecker-Buchse-Verbindung (99) durch die zweite Befestigungsöffnung (87) hindurchführbar ist; und/oder
wobei der Befestigungsabschnitt (85) durch eine Schutzkappe (89) überdeckt ist, wobei das Kabel (59) aus der Kabelaustrittsöffnung (65) in einen von dem Befestigungsabschnitt (85) und der Schutzkappe (89) begrenzten Innenraum (91) eingeführt ist, wobei das Anschlusskabel (93) und das Kabel (59) in dem Innenraum (91) miteinander verbunden sind.

11. Elektronisches Rahmenschloss (57') nach einem der vorhergehenden Ansprüche,
wobei der Rundbügel (11) in die Offenstellung (O) vorgespannt ist, wobei der Riegel (23) insbesondere dazu ausgebildet ist, in der Verriegelungsstellung (V) den in der Offenstellung (O) befindlichen Rundbügel (11) gegen eine Bewegung in die Geschlossenstellung (G) zu sichern.

12. Fahrrad (101),
umfassend einen Fahrradrahmen (131) sowie ein an dem Fahrradrahmen (131) befestigtes Rahmenschloss (57') nach einem der vorhergehenden Ansprüche;
insbesondere wobei das Fahrrad (101) als E-Bike (103) ausgebildet ist und eine elektrische Energiequelle (111) aufweist, wobei eine durch die elektrische Energiequelle (111) bereitgestellte Energieversorgung über das Kabel (59) an den Elektromotor (39) übermittelbar ist.

13. Fahrrad (101) nach Anspruch 12,
wobei das Kabel (59) des Rahmenschlosses (57') oder ein mit dem Kabel (59) des Rahmenschlosses (57') verbundenes Anschlusskabel (93) durch eine an dem Fahrradrahmen (131) ausgebildete Einführöffnung (105) in den Fahrradrahmen (131), insbesondere eine Hinterbaustrebe (119) des Fahrradrahmens (131), eingeführt ist; und/oder wobei das Fahrrad ein Schutzblech (113) aufweist, wobei das aus der Kabelaustrittsöffnung (65) austretende Kabel (59) oder ein mit dem Kabel (59) verbundenes Anschlusskabel (93) an einer einem Laufrad (117) des Fahrrads (101) zugewandten Unterseite (121) des Schutzblechs (113) entlanggeführt ist.

14. Fahrrad (101) nach einem der Ansprüche 12 oder 13,
wobei das Kabel (59) mit einer Steuereinrichtung (109) des Fahrrads (101) verbunden ist, welche dazu ausgebildet ist, ein Freigabesignal (F) zum Ansteuern des Elektromotors (39) zu erzeugen und über das Kabel (59) an den Elektromotor (39) zu übermitteln, wobei der Elektromotor (39) dazu ausgebildet ist, den Elektromotor (39) in Ansprechen auf das Freigabesignal (F) zum Antreiben des Riegels (23) in die Entriegelungsstellung (E) anzutreiben,
wobei die Steuereinrichtung (109) insbesondere innerhalb des Fahrradrahmens (131) angeordnet ist.

15. Fahrrad (101) nach Anspruch 14,
wobei die Steuereinrichtung (109) dazu ausgebildet ist, einen Öffnungsbefehl (A) von einem mobilen Öffnungsgerät (123), insbesondere einem Smartphone, zu empfangen und das Freigabesignal (F) in Ansprechen auf den Öffnungsbefehl (A) an den Elektromotor (39) zu übermitteln,
insbesondere wobei die Steuereinrichtung (109) dazu ausgebildet ist, den Öffnungsbefehl (A) über eine Funkverbindung zu empfangen; und/oder insbesondere wobei das Fahrrad (101) eine Verbindungseinrichtung (127) zum Verbinden des mobilen Öffnungsgeräts (123) mit dem Fahrrad (101) aufweist, wobei die Steuereinrichtung (109) über ein Verbindungskabel (129) mit der Verbindungseinrichtung (127) verbunden und dazu ausgebildet ist, den Öffnungsbefehl (A) über das Verbindungskabel (129) zu empfangen.

## Claims

1. An electronic frame lock (57') for a bicycle (101), in particular for an e-bike (103),
comprising
- a round hoop (11) rotatable between an open position (O) and a closed position (G),
- a lock body (67),
- an electromechanical locking mechanism (69) having a latch (23), which is movable between a locking position (V) and an unlocking position (E), and an electric motor (39),
wherein the latch (23) is configured to secure, in the locking position (V), the round hoop (11) positioned in the closed position (G) against a movement into the open position (O), and
wherein the electric motor (39) is configured to control the latch (23) to move from the locking position (V) into the unlocking position (E) in order to release a movement of the round hoop (11) into the open position (O), and
- a cable (59) for receiving a control signal and/or an energy supply for the electric motor (39),
wherein the frame lock (57') has an inner side (61) which is radially inwardly disposed with respect to a circumferential direction (U) of the round hoop (11) and an outer side (63) which is radially outwardly disposed with respect to the circumferential direction (U) of the round hoop (11),
**characterized in that**
the lock body (67) has a cable outlet opening (65) which is disposed at the inner side (61) and through which the cable (59) exits from the lock body (67).

2. An electronic frame lock (57') according to claim 1,
wherein the lock body (67) has a lock housing (71), within which the electric motor (39) is arranged, and wherein the lock housing (71) has a housing opening (73) through which the cable (59) exits from the lock housing (71) in a direction (T) which is substantially tangential with respect to the circumferential direction (U).

3. An electronic frame lock (57') according to claim 2,
wherein the lock housing (71) has a central housing section (77) which is oriented substantially tangentially to the round hoop (11), wherein the housing opening (73) is arranged at an end face (75) of the central housing section (77),
in particular wherein the electric motor (39) is oriented in the central housing section (77) and/or tangentially to the round hoop (11).

4. An electronic frame lock (57') according to claim 3,
wherein the lock housing (71) has guide sections (79) for guiding the round hoop (11) that extend away from the central housing section (77) and in the circumferential direction (U) of the round hoop (11).

5. An electronic frame lock (57') according to any one of the claims 2 to 4,
wherein the lock housing (71) has a housing bend (81) which adjoins the housing opening (73) and along which the cable (59) exiting from the housing opening (73) is guided to the cable outlet opening (65), wherein the housing bend (81) in particular determines a bend radius (B) for a guidance of the cable (59) to the cable outlet opening (65).

6. An electronic frame lock (57') according to any one of the claims 2 to 5,
wherein the lock housing (71) is at least sectionally received in an outer housing (83), wherein the outer housing (83) has the cable outlet opening (65),
wherein the outer housing (83) is in particular a plastic housing.

7. An electronic frame lock (57') according to any one of the preceding claims,
wherein the frame lock (57') has a fastening section (85) having at least one fastening opening (87) for fastening, in particular screwing, the frame lock (57') to a frame of the bicycle (101) by means of a fastening element, in particular a screw.

8. An electronic frame lock (57') according to claim 7,
wherein the fastening section (85) is covered by a protective cap (89),
wherein the cable (59) is introduced from the cable outlet opening (65) into an inner space (91) which is bounded by the fastening section (85) and the protective cap (89).

9. An electronic frame lock (57') according to claim 7 or 8,
wherein the fastening section (85) has at least two fastening openings (87), in particular exactly two, exactly three or exactly four fastening openings (87),
wherein the fastening element for fastening the frame lock (57') to the bicycle (101) can be guided through a first of the at least two fastening openings (87) and wherein a second of the at least two fastening openings (87) is provided to remain free upon a fastening of the frame lock (57') to the bicycle (101), wherein the cable (59) can be guided through the second fastening opening (87) or wherein a connecting cable (93), which is connectable to the cable (59), can be guided through the second fastening opening (87) in order to establish a connection with the cable (59).

10. An electronic frame lock (57') according to claim 9,
wherein the cable (59) can be connected to the connecting cable (93) by a plug-socket connection (99), wherein a plug (95) of the plug-socket connection (99) and/or a socket (97) of the plug-socket connection (99) can be guided through the second fastening opening (87); and/or
wherein the fastening section (85) is covered by a protective cap (89), wherein the cable (59) is introduced from the cable outlet opening (65) into an inner space (91) which is bounded by the fastening section (85) and the protective cap (89), wherein the connecting cable (93) and the cable (59) are connected to one another in the inner space (91).

11. An electronic frame lock (57') according to any one of the preceding claims,
wherein the round hoop (11) is preloaded into the open position (O),
wherein the latch (23) is in particular configured to secure, in the locking position (V), the round hoop (11) located in the open position (O) against a movement into the closed position (G).

12. A bicycle (101),
comprising a bicycle frame (131) and a frame lock (57') fastened to the bicycle frame (131) according to any one of the preceding claims;
in particular wherein the bicycle (101) is configured as an e-bike (103) and has an electrical energy source (111), wherein an energy supply provided by the electrical energy source (111) can be transmitted via the cable (59) to the electric motor (39).

13. A bicycle (101) according to claim 12,
wherein the cable (59) of the frame lock (57') or a connecting cable (93) connected to the cable (59) of the frame lock (57') is introduced through an introduction opening (105) formed at the bicycle frame (131) into the bicycle frame (131), in particular a rear stay (119) of the bicycle frame (131); and/or
wherein the bicycle has a mudguard (113), wherein the cable (59) exiting from the cable outlet opening (65) or a connecting cable (93) connected to the cable (59) is guided at an underside (121) of the mudguard (113) facing a wheel (117) of the bicycle (101).

14. A bicycle (101) according to one of the claims 12 or 13,
wherein the cable (59) is connected to a control device (109) of the bicycle (101), said control device being configured to generate a release signal (F) for controlling the electric motor (39) and to transmit it via the cable (59) to the electric motor (39), wherein the electric motor (39) is configured to drive the electric motor (39) in order to drive the latch (23) into the unlocking position (E) in response to the release signal (F),
wherein the control device (109) is in particular arranged within the bicycle frame (131).

15. A bicycle (101) according to claim 14,
wherein the control device (109) is configured to receive an opening command (A) from a mobile opening device (123), in particular a smartphone, and to transmit the release signal (F) to the electric motor (39) in response to the opening command (A),
in particular wherein the control device (109) is configured to receive the opening command (A) via a radio connection; and/or in particular wherein the bicycle (101) has a connection device (127) for connecting the mobile opening device (123) to the bicycle (101), wherein the control device (109) is connected to the connection device (127) via a connection cable (129) and is configured to receive the opening command (A) via the connection cable (129).

## Revendications

1. Antivol de cadre électronique (57') pour un vélo (101), en particulier pour un vélo électrique (103),
comprenant
- un arceau rond (11) pouvant tourner entre une position ouverte (O) et une position fermée (G),
- un corps d'antivol (67),
- un mécanisme de verrouillage électromécanique (69) comprenant un pêne (23) mobile entre une position de verrouillage (V) et une position de déverrouillage (E) et un moteur électrique (39),
dans lequel le pêne (23) est configuré pour sécuriser, dans la position de verrouillage (V), l'arceau rond (11) positionné dans la position fermée (G) contre un déplacement vers la position ouverte (O), et
dans lequel le moteur électrique (39) est configuré pour entraîner le pêne (23), pour libérer un déplacement de l'arceau rond (11) vers la position ouverte (O), vers un déplacement depuis la position de verrouillage (V) vers la position de déverrouillage (E), et
- un câble (59) destiné à recevoir un signal de commande et/ou une alimentation en énergie pour le moteur électrique (39),
dans lequel l'antivol de cadre (57') présente une face intérieure (61) radialement intérieure par rapport à une direction circonférentielle (U) de l'arceau rond (11) et une face extérieure (63) radialement extérieure par rapport à la direction circonférentielle (U) de l'arceau rond (11),
**caractérisé en ce que**
le corps d'antivol (67) présente une ouverture de sortie de câble (65) située sur la face intérieure (61), à travers laquelle le câble (59) sort du corps d'antivol (67).

2. Antivol de cadre électronique (57') selon la revendication 1,
dans lequel le corps d'antivol (67) présente un boîtier d'antivol (71), à l'intérieur duquel le moteur électrique (39) est agencé, et dans lequel le boîtier d'antivol (71) présente une ouverture de boîtier (73), à travers laquelle le câble (59) sort du boîtier d'antivol (71) dans une direction (T) sensiblement tangentielle par rapport à la direction circonférentielle (U).

3. Antivol de cadre électronique (57') selon la revendication 2,
dans lequel le boîtier d'antivol (71) présente une partie centrale de boîtier (77) orientée de manière sensiblement tangentielle par rapport à l'arceau rond (11), l'ouverture de boîtier (73) étant agencée sur une face frontale (75) de la partie centrale de boîtier (77),
en particulier dans lequel le moteur électrique (39) est orienté dans la partie centrale de boîtier (77) et/ou tangentiellement par rapport à l'arceau rond (11).

4. Antivol de cadre électronique (57') selon la revendication 3,
dans lequel le boîtier d'antivol (71) présente des portions de guidage (79) s'étendant à l'écart de la partie centrale de boîtier (77) et s'étendant dans la direction circonférentielle (U) de l'arceau rond (11), pour guider l'arceau rond (11).

5. Antivol de cadre électronique (57') selon l'une des revendications 2 à 4,
dans lequel le boîtier d'antivol (71) présente une courbure de boîtier (81) contiguë à l'ouverture de boîtier (73), le long de laquelle le câble (59) sortant de l'ouverture de boîtier (73) est guidé vers l'ouverture de sortie de câble (65),
dans lequel la courbure de boîtier (81) détermine en particulier un rayon de courbure (B) pour guider le câble (59) vers l'ouverture de sortie de câble (65).

6. Antivol de cadre électronique (57') selon l'une des revendications 2 à 5,
dans lequel le boîtier d'antivol (71) est logé au moins par endroits dans un boîtier extérieur (83), le boîtier extérieur (83) présentant l'ouverture de sortie de câble (65),
dans lequel le boîtier extérieur (83) est en particulier un boîtier en matière plastique.

7. Antivol de cadre électronique (57') selon l'une des revendications précédentes,
dans lequel l'antivol de cadre (57') présente une portion de fixation (85) comprenant au moins une ouverture de fixation (87) destinée à la fixation, en particulier au vissage, de l'antivol de cadre (57') sur un cadre du vélo (101) au moyen d'un élément de fixation, en particulier d'une vis.

8. Antivol de cadre électronique (57') selon la revendication 7,
dans lequel la portion de fixation (85) est recouverte par un capuchon de protection (89), le câble (59) étant introduit depuis l'ouverture de sortie de câble (65) dans un espace intérieur (91) délimité par la portion de fixation (85) et le capuchon de protection (89).

9. Antivol de cadre électronique (57') selon la revendication 7 ou 8,
dans lequel la portion de fixation (85) présente au moins deux ouvertures de fixation (87), en particulier exactement deux, exactement trois ou exactement quatre ouvertures de fixation (87),
dans lequel l'élément de fixation destiné à fixer l'antivol de cadre (57') au vélo (101) peut être guidé à travers une première desdites au moins deux ouvertures de fixation (87), et dans lequel une seconde desdites au moins deux ouvertures de fixation (87) est prévue pour rester libre lors d'une fixation de l'antivol de cadre (57') au vélo (101), le câble (59) pouvant être guidé à travers la seconde ouverture de fixation (87) ou un câble de raccordement (93) pouvant être relié au câble (59) pour établir une liaison avec le câble (59) pouvant être guidé à travers la seconde ouverture de fixation (87).

10. Antivol de cadre électronique (57') selon la revendication 9,
dans lequel le câble (59) peut être relié au câble de raccordement (93) par une liaison fiche-prise (99), une fiche (95) de la liaison fiche-prise (99) et/ou une prise (97) de la liaison fiche-prise (99) pouvant être guidée à travers la seconde ouverture de fixation (87) ; et/ou
dans lequel la portion de fixation (85) est recouverte par un capuchon de protection (89), le câble (59) étant introduit depuis l'ouverture de sortie de câble (65) dans un espace intérieur (91) délimité par la portion de fixation (85) et le capuchon de protection (89), le câble de raccordement (93) et le câble (59) étant reliés l'un à l'autre dans l'espace intérieur (91).

11. Antivol de cadre électronique (57') selon l'une des revendications précédentes,
dans lequel l'arceau rond (11) est sollicité vers la position ouverte (O), le pêne (23) étant configuré en particulier pour sécuriser, dans la position de verrouillage (V), l'arceau rond (11) se trouvant dans la position ouverte (O) contre un déplacement vers la position fermée (G).

12. Vélo (101),
comprenant un cadre de vélo (131) ainsi qu'un antivol de cadre (57') fixé au cadre de vélo (131) selon l'une des revendications précédentes;
en particulier dans lequel le vélo (101) est conçu comme un vélo électrique (103) et présente une source d'énergie électrique (111), une alimentation en énergie fournie par la source d'énergie électrique (111) pouvant être transmise par l'intermédiaire du câble (59) au moteur électrique (39).

13. Vélo (101) selon la revendication 12,
dans lequel le câble (59) de l'antivol de cadre (57') ou un câble de raccordement (93) relié au câble (59) de l'antivol de cadre (57') est introduit à travers une ouverture d'insertion (105) formée sur le cadre de vélo (131) dans le cadre de vélo (131), en particulier un hauban arrière (119) du cadre de vélo (131) ; et/ou
dans lequel le vélo présente un garde-boue (113), le câble (59) sortant de l'ouverture de sortie de câble (65) ou un câble de raccordement (93) relié au câble (59) étant guidé le long d'une face inférieure (121) du garde-boue (113) tournée vers une roue (117) du vélo (101).

14. Vélo (101) selon l'une des revendications 12 ou 13,
dans lequel le câble (59) est relié à un dispositif de commande (109) du vélo (101), lequel est configuré pour générer un signal de libération (F) destiné à commander le moteur électrique (39) et pour le transmettre par l'intermédiaire du câble (59) au moteur électrique (39), le moteur électrique (39) étant configuré pour entraîner le moteur électrique (39), en réponse au signal de libération (F), pour entraîner le pêne (23) vers la position de déverrouillage (E),
dans lequel le dispositif de commande (109) est agencé en particulier à l'intérieur du cadre de vélo (131).

15. Vélo (101) selon la revendication 14,
dans lequel le dispositif de commande (109) est configuré pour recevoir une commande d'ouverture (A) provenant d'un dispositif mobile d'ouverture (123), en particulier d'un smartphone, et pour transmettre le signal de libération (F) au moteur électrique (39) en réponse à la commande d'ouverture (A),
en particulier dans lequel le dispositif de commande (109) est configuré pour recevoir la commande d'ouverture (A) par l'intermédiaire d'une connexion radio ; et/ou en particulier dans lequel le vélo (101) présente un dispositif de liaison (127) destiné à relier le dispositif mobile d'ouverture (123) au vélo (101), le dispositif de commande (109) étant relié au dispositif de liaison (127) par l'intermédiaire d'un câble de liaison (129) et étant configuré pour recevoir la commande d'ouverture (A) par l'intermédiaire du câble de liaison (129).
